(19) Europäisches Patentamt
European Patent Office
Office européen des brevets

(11) **EP 2 884 620 B1**

(12) **EUROPÄISCHE PATENTSCHRIFT**

(45) Veröffentlichungstag und Bekanntmachung des Hinweises auf die Patenterteilung:
**24.07.2019 Patentblatt 2019/30**

(51) Int Cl.:
***H02J 7/00*** (2006.01)

(21) Anmeldenummer: **14197601.9**

(22) Anmeldetag: **12.12.2014**

(54) **Verfahren zum Laden von Batterien und Konverter zum Laden**

Method for the charging of batteries and converter for charging

Procédé de chargement de batteries et convertisseur de chargement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2013 FR 1362612**
**06.02.2014 DE 102014001724**
**06.03.2014 DE 102014002973**

(43) Veröffentlichungstag der Anmeldung:
**17.06.2015 Patentblatt 2015/25**

(73) Patentinhaber: **IAV GMBH**
**10587 Berlin (DE)**

(72) Erfinder: **Barbé, David**
**92600 Asnières-sur-Seine (FR)**

(56) Entgegenhaltungen:
**EP-A1- 2 571 131      DE-A1- 10 312 591**
**DE-A1-102012 104 434   US-A1- 2009 273 320**
**US-A1- 2012 212 173    US-A1- 2013 249 466**
**US-B2- 8 040 110**

**Beschreibung**

Die Erfindung beschreibt ein Verfahren zum Laden von Batterien und Konverter zur Durchführung des Verfahrens.

Unter Batterien werden im Sinne der Anmeldung jegliche wiederaufladbaren Batterien verstanden, unabhängig von ihrer Bauart. Batterien werden in einer Vielzahl von mobilen Anwendungen genutzt. Beispielhaft genannte Einsatzfälle sind hierbei Mobiltelefone, tragbare Computer, Elektrofahrzeuge und viele andere Anwendungen. Verschiedene Batteriematerialien sind hierbei bekannt. Beispielsweise finden Lithium-Ionen-Akkus, Bleiakkus, NiMh- und NiCd-Batterien Verwendung. Zur Ladung von Batterien werden Ladegeräte verwendet, welche aus einem elektrischen Konverter bestehen. Verschiedenste Konverter sind dabei bekannt. Beispielsweise DC/DC-Konverter, AC/DC-Konverter, welche drahtgebunden oder auch drahtlos eine Energieübertragung realisieren können. Konverter im Sinne der Erfindung ist hierbei jede steuerbare Einheit, welche Energie zum Laden einer Batterie steuerbar von einer elektrischen Energiequelle zur Batterie transferiert.

Unterschiedliche Ladealgorithmen sind für verschiedene Batterietypen bekannt. Einfachste Ladealgorithmen sind durch eine Konstantstromladung oder eine Konstantspannungsladung gekennzeichnet. Strom und Spannung werden dabei in Abhängigkeit von der Kapazität der Batterie für eine definierte Ladezeit an die Batterie angelegt. Es sind weiterhin verschiedene Ladealgorithmen bekannt, welche auf Batterieparameter abgestimmt sind oder adaptiv auf Batterieparameter während der Ladung reagieren. Verschiedene Batterieparameter, wie maximale Ladung, Batterieschonung oder Batterietemperatur können berücksichtigt werden. Es ist weiterhin bekannt, Batterien je nach Anforderung mit voneinander verschiedenen Lademodi zu betreiben. Bekannt ist hierbei die Nutzung eines Schnelllademodus oder eines Normallademodus in Abhängigkeit von der zur Ladung zur Verfügung stehenden Zeit. Es sind Ladegeräte bekannt, welche die manuelle Auswahl eines Normallademodus oder eines Schnelllademodus erlauben. Schnelllademodi sind dabei durch höhere Ladeströme gekennzeichnet, welche einen negativen Effekt auf den Batteriegesundheitszustand haben können.

Weiterhin sind energiepreisorientierte Ladeverfahren bekannt, welche den sich ggf. während des Ladevorgangs ändernden Energiepreis betrachten und die Ladestrategie danach ausrichten. Das Ladeprofil wird so gestaltet, dass die größtmögliche Energiemenge während eines Zeitraums niedrigen Energiepreises zur Batterie transferiert wird. Einen solchen Ladealgorithmus zeigt die chinesische Patentanmeldung CN102044723 (A). Es wird beschrieben, dass zwischen einem Schnelllademodus und einem ökonomischen Lademodus gewählt werden kann. Wenn der Zeitraum des Ladevorgangs und die zur Verfügung stehende Zeit bekannt sind, kann die Notwendigkeit eines Schnelllademodus abgeschätzt werden. Wird der ökonomische Lademodus ausgewählt, so wird ein energiepreisabhängiges Ladeprofil genutzt. Der ökonomische Lademodus ist darauf gerichtet, den Großteil der Ladung während einer Zeitspanne günstigen Energiepreises in die Batterie zu laden. Der beschriebene ökonomische Lademodus hat keinen Einfluss auf das Ladeprofil, wenn sich der Energiepreis während der Ladezeit nicht ändert.

Batteriebetriebene elektronische Einheiten, welche zu gesondert vorhersehbaren Zeiten genutzt werden, können oft ohne Zeitdruck während einer Zeitspanne geladen werden, deren Endzeit und somit deren zur Verfügung stehende Ladezeit bekannt ist. Die Mehrzahl elektrischer Fahrzeuge für den privaten Transport wird zur Tagzeit genutzt und während der Nachtzeit am heimatlichen Abstellort geladen. Ein typisches Fahrprofil zeigt lange Parkzeiten zwischen kurzen Nutzungszeiten. Ein üblicher Fahrtzyklus beinhaltet eine Anzahl von Parkperioden, deren Stillstandszeiten beim Abstellen bereits bekannt sind. Ebenso werden kleine Nutzfahrzeuge für den innerbetrieblichen Transport, Gabelstapler usw. typischerweise nur während der Betriebszeiten genutzt und außerhalb dieser geladen. Ähnliches gilt für Mobiltelefone, tragbare Computer usw. Die meisten batteriebetriebenen Anwendungen weisen Nutzungsperioden auf, die von längeren Ladezeiträumen unterbrochen sind, bei denen ohne Zeitdruck geladen werden kann und deren Ladezeitraum im Vorhinein vorhersehbar ist. Es ist daher für viele Anwendungen möglich, die Information der zur Verfügung stehenden Ladezeit zu nutzen, um ein intelligentes Ladeprofil zu erstellen, welches sich von den Konstantstrom- und Konstantspannungsverfahren unterscheidet.

Die deutsche Patentanmeldung DE 10 2010 011 704 A1 beschreibt ein elektrisch angetriebenes Fahrzeug, welches einen preisabhängigen Lademodus aufweist. Die zu ladende Energiemenge und die Endzeit, zu welcher der Ladevorgang abgeschlossen sein muss, werden zur Adaption des Ladestromes genutzt. Dieser wird automatisch in Abhängigkeit von der zur Verfügung stehenden Zeit und den Energiekosten adaptiert. Längere Ladezeiten führen dabei zu einem verminderten Ladestrom, wobei Preisschwankungen während der Ladezeit das Ladeprofil beeinflussen.

Ein weiteres Beispiel eines preisorientierten Ladeprofils wird in der französischen Patentanmeldung FR 2987143 beschrieben. Ein optimierter Ladealgorithmus wird beschrieben, der ein Batteriemodell nutzt, dessen Ladeprofil in Abhängigkeit von der zur Verfügung stehenden Ladezeit, dem in dieser Zeit zu erreichenden Ladzustand und dem Energiepreis während dieser Zeit berechnet wird. Es wird eine Optimierung beschrieben, welche den Energiepreis und den Energieverbrauch während des Ladzyklus beachtet.

Gemäß der Patentanmeldung US 2009/273320 A1 ist es weiterhin Stand der Technik, den Ladeprozess einer Batterie in Abhängigkeit einer Überwachung des Ladestromes, der Ladespannung und der Batterietemperatur zu steuern.

Ferner ist es gemäß dem Patent US 8 040 110 B2 Stand der Technik, einen oder mehrere Parameter einer Batterie oder Änderungen dieser Parameter zu messen und einen Ladeparameter in Abhängigkeit davon zu bestimmen sowie anhand dieses Ladeparameters der Batterie Energie zuzuführen.

Außerdem ist gemäß der europäischen Patentanmeldung EP 2 571 131 A1 die Nutzung von Batterieparametern für eine Diagnose Stand der Technik. Dabei werden Vergleiche zwischen Messwerten und Referenzwerten durchgeführt und so auf den relativen Zustand einer Batterie geschlossen.

Die deutsche Patentanmeldung DE 10 2012 104 434 A1 beschreibt ein Verfahren für die Bestimmung des Ladestandes eines Energiespeichers während des Ladevorgangs eines Energiespeichers, aufweisend die folgenden Schritte, Überwachen der Ladespannung, Bestimmen eines Zeitabschnitts mit im Wesentlichen konstanter Ladespannung, Bestimmen der Ladestromsteigung und des Ladestroms in dem Zeitabschnitt mit im Wesentlichen konstanter Ladespannung, Bestimmen von Ladestandwerten des Energiespeichers aus Kalibrationskurven der Ladestromsteigung und mit den bestimmen Werten der Ladestromsteigung und des Ladestroms, Erzeugen eines Minimalwerts aus den bestimmten Ladestandwerten als Ladestand des Energiespeichers.

Aus der Patentanmeldung US 2013/249466 A1 ist ein Ladeverfahren für mehrere Batterien einer Photovoltaikanlage bekannt, wobei verschiedene Impulsfolgen zur Ladung verwendet werden.

Gemäß der DE 103 12 591 A1 ist ein Ladeverfahren für eine Batterie bekannt, bei dem der Ladevorgang der Batterie in Abhängigkeit von dem Zeitpunkt einer nächsten Nutzung der Batterie und/oder dem bei einer nächsten Nutzung der Batterie erforderlichen Ladezustand der Batterie gesteuert wird. Dabei orientiert sich das Ladeverfahren danach, ob zum Zeitpunkt der nächsten Nutzung die maximal mögliche Batteriekapazität zur Verfügung stehen muss oder ob möglicherweise auch eine Teilladung der Batterie ausreichend ist, und/oder danach, wann die nächste Nutzung der Batterie stattfindet bzw. zu erwarten ist.

Gemäß der US 2012/212173 A1 ist ein Verfahren zur Verwaltung des Wiederaufladens mindestens einer Batterie bekannt. Dieses Verfahren ist dadurch gekennzeichnet, dass es eine Weiterleitung des Bedarfs des gewünschten Ladezustands für eine Batterie zu einem gegebenen Zeitpunkt von dem Benutzer oder einem Fahrzeug an eine Wiederaufladevorrichtung umfasst und zwar derart, dass die Wiederaufladung der Batterie erlaubt, einen Ladezustand zu erreichen, der höher als der oder gleich dem gewünschten Ladezustand zu dem gegebenen Zeitpunkt ist und dadurch, dass es mehrere Quellen zur Erringung von elektrischer Energie für die Wiederaufladung einer Batterie verwendet, und dadurch, dass es eine Minimierung der Gesamtkosten für die Wiederaufladung der Batterie durch Minimieren der Summe umfasst, in der die Kosten einer durch eine Quelle zu einem Zeitpunkt erzeugten Energieeinheit und die Menge der durch eine Quelle für die Wiederaufladung der Batterie zu einem Zeitpunkt erzeugten Energie darstellt.

Die Ladeprofile, welche im Stand der Technik beschrieben werden, sind auf den Energiepreis, die Batteriegesundheit oder Energiebelastungsfaktoren des Erzeugungsnetzwerkes ausgerichtet. Bekannte Optimierungen der Ladealgorithmen reduzieren in Abhängigkeit vom Ladezustand und von der Ladezeit den Ladestrom auf ein Minimum. Die preisabhängigen Optimierungen haben keinen Einfluss auf das Ladeprofil, sobald die Energiepreise während der Ladezeit konstant bleiben. Die Ladeprofile werden aus dem Innenwiderstand der Batterie errechnet und deren Optimierung führt daher zu einer Minimierung des Ladestroms, so dass der kleinstmögliche Ladestrom berechnet wird, der das Aufladen auf den geforderten Ladezustand ermöglicht.

Aufgabe der Erfindung ist es daher, eine Ladestrategie bereitzustellen, welche ein zeitabhängiges Sollwertprofil für den Ladestrom und/oder die Ladespannung und/oder die Ladeleistung bereitstellt, welches den Energieverbrauch während der Ladezeit minimiert.

Die Erfindung beruht auf der Erkenntnis, dass der Energieverbrauch während des Ladezyklus wenigstens in Abhängigkeit von Ladestrom und/oder der Ladespannung oder der Ladeleistung zu einem spezifischen Ladezustand (State of charge SOC) schwankt. Verschiedene Profile des Ladestrom- und/oder des Ladespannungs- oder des Ladeleistungssollwertes verursachen eine spezifische in die Batterie geladene Energiemenge. Jedes Ladestrom- und/oder Ladespannungs- und/oder Ladeleistungsprofil erzeugt einen spezifischen Ladezustand und einen zugehörigen Energieverlust während des Ladevorgangs. Vergleicht man die in die Batterie geladene Energiemenge mit der zur Ladung benötigten Energiemenge, so ergibt sich ein signifikanter, von der Ladestrategie abhängiger Energieverlust. Ziel der Erfindung ist es daher, eine optimierte Ladestrategie zu definieren, welche eine Steuerung des Ladestrom- und/oder Ladespannungs- oder Ladeleistungssollwerts während der zur Verfügung stehenden Ladezeit ermöglicht. Die optimierte Strategie wird dabei durch eine Minimierung der Leistungsverluste während des Ladevorganges gefunden, welche über die zur Verfügung stehende Ladezeit zu einer Minimierung des gesamten Energieverlustes beim Laden führt. Die Kenntnis der zur Verfügung stehenden Ladezeit und des minimal zu erreichenden Ladezustandes ist hierfür notwendig. Ein optimiertes Ladeprofil kann erzeugt werden, indem ein Modell genutzt wird, welches zumindest die vom jeweiligen Ladezustand abhängigen Leistungsverluste beim jeweiligen Ladestrom und/oder der jeweiligen Ladespannung oder der jeweiligen Ladeleistung berücksichtigt. Die Minimierung der Leistungsverluste zu jedem Zeitpunkt des Ladevorganges über die gesamte Ladezeit führt zu einer Minimierung des gesamten Energieverlustes oder in anderen Worten führt die Maximierung der Ladeeffizienz zu einem energieoptimalen Ladeprofil für die zur Verfügung stehende Ladezeit. Die Nutzung eines Optimierungsalgorithmus führt zu einer optimalen Sollwerttrajektorie für Ladestrom- und/oder Ladespannung oder Ladeleistung. Das Modell der Leistungsverluste beim Laden wird zur Lösung der Optimierungsaufgabe genutzt, um an jedem Punkt des Ladezyklus entsprechend der dann gültigen Randbedingungen, z. B. SOC, einen Sollwert für Ladestrom und/oder die Ladespannung oder die jeweilige Ladeleistung zu finden, welche einen minimalen Leistungsverlust beim Laden erzeugt. Als weitere Randbedingung der Optimierung muss beachtet werden, dass der minimal erforderliche Ladezustand in der minimal zur Verfügung stehenden Zeit erreicht wird. Die Eingabe der minimal zur Verfügung stehenden Ladezeitspanne ist hierbei notwendig für die Optimierung. Es bedarf also der Kenntnis des frühest möglichen Zeitpunkts, zu dem der geforderte Ladezustand erreicht wird. Das geforderte Minimum des zu erreichenden Ladezustandes bestimmt die in die Batterie zu ladende Energiemenge. Anstelle des geforderten Minimums der zu ladenden Energie kann, für den Fall, dass dieses nicht bekannt ist, der maximal mögliche Ladezustand (SOC=100%) als Ladezustandssollwert gesetzt werden. Die Annahme des maximal möglichen Ladezustands kann die Eingabe eines minimalen Sollladezustandes ersetzen. Der minimal zu erreichende Ladezustand wird dann durch den maximal erreichbaren Ladezustand ersetzt und die Angabe einer minimal zur Verfügung stehenden Zeitspanne für den Ladevorgang ist für die Ausführung des Optimierungsalgorithmus ausreichend. Für die Optimierung werden Algorithmen der Optimalsteuerung genutzt, welche für das gegebene Modell unter den Randbedingungen eine optimierte Sollwerttrajektorie mit minimalem Gesamtenergieverlust ermitteln.

Das Modell der Leistungsverluste in der Batterie beim Laden kann in vorteilhafter Weise um weitere Modellkomponenten ergänzt werden. Ein ergänztes Modell kann gebildet werden, indem ein Modell der wenigstens ladestromabhängigen Leistungsverluste eines Ladegerätes und/oder ein Modell der wenigstens ladestromabhängen Leistungsverluste der Verbindungskabel ergänzt wird. Die optimale Sollwerttrajektorie für den Ladestrom und/oder die Ladespannung oder die Ladeleistung wird dabei über den Verlauf der Ladezeit ermittelt, indem für das ergänzte Modell eine Optimierung derart erfolgt, dass die Sollwerttrajektorie für den Ladestrom und/oder die Ladespannung oder die Ladeleistung ermittelt wird, bei dem für das ergänzte Modell ein minimaler Energieverlust innerhalb der minimal zur Verfügung stehenden Ladezeit beim Laden auf das erforderliche Minimum des zu erreichenden Ladezustandes auftritt.

Ein möglicher Ansatz für einen Optimierungsalgorithmus ist die Nutzung einer Effizienzoptimierung. Hierbei werden die Gesamtenergieverluste betrachtet und durch das Integral der Leistungsverluste während der Ladezeit beschrieben. Aus der Formulierung eines Modells für die Leistungsverluste kann ein globales Effizienzmaximum der Energieverluste für die zur Verfügung stehende Ladezeit ermittelt werden. Das Effizienzmaximum, welches die jeweiligen Leistungsverluste innerhalb der zur Verfügung stehenden Ladezeit berücksichtigt, wird dabei schrittweise ermittelt. Das Modell der Leistungsverluste beim Laden, welches wenigstens vom jeweiligen Ladezustand abhängig ist, wird im einfachsten Fall durch ein kennfeldbasiertes Modell gebildet, welches z. B. bei Testladungen von verschiedenen Batterietypen ermittelt wurde. In einem einfachen Fall spiegelt das Modell die Leistungsverluste für einen spezifischen Ladezustand in Abhängigkeit vom Ladestrom- und/oder Ladespannungs- oder Ladeleistungssollwert wider. Das Modell kann alternativ durch eine theoretische Modellbildung gefunden werden, welches den Ladezyklus und dessen Verluste unter Nutzung von bekannten physikalischen Batteriemodellen beschreibt. Aus bekannten Systemgleichungen von Batteriesystemen oder alternativ aus Systemgleichungen für Batteriesysteme und Batterieladegeräte kann ein Gesamtmodell gebildet werden, welches die Leistungsverluste während des Ladevorgangs beschreibt. Die Optimierung wird genutzt, um ein zeitbasiertes Sollwertprofil für den Ladestrom und/oder die Ladespannung oder die Ladeleistung zu finden. Eine optimierte Sollwerttrajektorie kann somit für den gesamten Ladevorgang definiert werden. Die Verwendung einer optimierten Sollwerttrajektorie für den Ladevorgang führt zu einer Energieeinsparung, welche signifikant ist, wenn der Ladevorgang ausreichend lang sein kann. Es ist weiterhin von Vorteil, wenn die zur Verfügung stehende Ladezeit vor dem Start des Ladevorgangs genau bekannt ist oder wenigstens ein frühester Endzeitpunkt für die Ladezeit definiert werden kann.

In einer alternativen Ausgestaltung der Optimierung wird die Hamilton-Funktion zur Formulierung des Optimierungsproblems genutzt. Sie basiert auf der Theorie der Optimalsteuerungen, wobei das von L.S. Pontrjagin beschriebene Minimumprinzip genutzt wird. Es werden hierfür die Energieverluste beim Laden mittels einer Kostenfunktion beschrieben. Die Kostenfunktion ist dabei die mathematische Beschreibung der zum Laden erforderlichen Energie, um einen spezifischen Ladezustand zu erreichen. Kosten im Allgemeinen bezeichnen den Aufwand zur Erreichung eines Ziels. Die Kostenfunktion der vorliegenden Erfindung bezeichnet den Energieverbrauch beim Laden und ist im ersten Schritt vom Energiepreis unabhängig. Die Formulierung des Optimierungsproblems erfolgt derart, dass mittels der Hamilton-Funktion die momentanen Kosten durch die Leistungsverluste im Verhältnis zu den Kosten zum Erreichen eines spezifischen Ladezustandes in der zur Verfügung stehenden Zeit bewertet werden.

Eine weitere Alternative zur Lösung des Optimierungsproblems ist die Verwendung eines rekursiven Algorithmus, welcher von einem definierten Endladezustand zu einer definierten Zeit startet und einen optimalen Pfad zum Startpunkt sucht. Eine Möglichkeit der Lösung ist die Optimumsuche mittels dynamischer Programmierung nach Bellmann. Jeder Schritt zur Änderung des Ladezustandes (der Gewinn für jede Stufe) wird in Relation zu dem dabei eintretenden Energieverlust bewertet. Das Optimierungsproblem kann durch die rekursive Abarbeitung in kleine Teiloptimierungsaufgaben zerlegt werden.

Eine alternative Ausgestaltung des Optimierungsalgorithmus errechnet für jede mögliche Sollwerttrajektorie die gesamten Energieverluste beim Laden und wählt denjenigen mit minimalem Energieverbrauch zum Laden der Batterie in der zur Verfügung stehenden Zeit aus.

In einer möglichen Ausgestaltung des Verfahrens werden die durch die Sollwertänderungen des Ladestroms und/oder der Ladespannung oder der Ladeleistung hervorgerufenen dynamischen Verluste bei der Ermittlung der Energieverluste mit berücksichtigt. Die optimierte Trajektorie des Ladestrom- und/oder des Ladespannungs- oder des Ladeleistungssollwertes bewertet somit zusätzlich zu den im Ladegerät beim Laden auftretenden Leistungsverlusten diejenigen Verluste, welche durch das dynamische Verändern des Sollwertes hervorgerufen werden.

Eine weitere mögliche Ausgestaltung des Verfahrens berücksichtigt bei der Ermittlung der Energieverluste die Lang-Zeit-Verluste durch Alterungsphänomene beeinflusst durch die gewählte Trajektorie des Ladestrom- und/oder des Ladespannungs- oder des Ladeleistungssollwerts. Der Gedanke hierbei ist es, den Einfluss der Trajektorie des Ladestroms- und/oder des Ladespannungs- oder des Ladeleistungssollwertes hinsichtlich seines Einflusses auf die verbleibende Kapazität für zukünftige Ladezyklen zu betrachten. Die durch die gewählte Ladestrategie erzeugten Lang-Zeit-Kosten werden bewertet und die Trajektorie des Ladestroms- und/oder des Ladespannungs- oder des Ladeleistungssollwertes wird adaptiert, wenn die Lang-Zeit-Kapazitätsverluste den durch die energieoptimierte Ladung zu erzielenden Gewinn überschreiten.

Eine weitere mögliche Ausgestaltung erlaubt die Auswahl zwischen verschiedenen Lademodi. Der hinsichtlich seiner Energieverluste optimierte Lademodus kann dabei von einem Nutzer zwischen weiteren Lademodi ausgewählt werden. Eine alternative Ausführung erlaubt die Auswahl des hinsichtlich der Energieverluste optimierten Lademodus, wenn unter den gegebenen Bedingungen der zur Verfügung stehenden Ladezeit und dem zu erreichenden Ladezustand der hinsichtlich der Energieverluste optimierte Lademodus ein signifikantes Einsparungspotential aufweist. Alternativ kann der Lademodus, welcher hinsichtlich der Energieverluste optimiert ist, für den Fall, dass der Energieverbrauch gegenüber anderen verfügbaren Lademodi minimiert und der gewünschte Ladezustand in der zur Verfügung stehenden Zeit erreicht werden kann, dem Nutzer als bevorzugter Lademodus vorgeschlagen oder alternativ automatisch ausgewählt werden. Es ist möglich, den Energieverbrauch beim Laden unter Beachtung der Energieverluste vor dem Start des Ladeverfahrens zu simulieren. Die Sollwerttrajektorie von Ladestrom und/oder Ladespannung oder Ladeleistung ist durch die Optimierung ermittelbar, wobei Ladezeit und zu erreichender Ladezustand bekannt sind. Die Energieverluste während der Ladezeit sind bei bekannter Zeitdauer und Sollwerttrajektorie mit dem Modell der Leistungsverluste beim Laden ermittelbar. Der hinsichtlich der Energieverluste optimierte Lademodus kann somit mit anderen Lademodi, z. B. Schnellladen oder Konstantstrom oder Konstantspannungsladung oder einer Mischung aus beiden verglichen werden. Zeigt die Simulation eine signifikante Energieeinsparung, wird der jeweilige Lademodus dem Nutzer vorgeschlagen oder automatisch ausgewählt, wenn der gewünschte Ladezustand mit dem jeweiligen Lademodus erreicht werden kann. Es ist so weiterhin möglich, verschiedene Ladezeiten zu simulieren, so dass der Energiebedarf ladezeitabhängig ermittelt und angezeigt werden kann. Es kann somit eine Information ermittelt und angezeigt werden, welche ladezeitabhängig eine Energieeinsparung ermittelt, z. B. dem Nutzer eine Information gibt, dass eine Ladezeitverlängerung von beispielsweise einer Stunde zu einer Energieeinsparung von 2% führt.

Eine weitere Ausführungsform der Erfindung nutzt Messwerte des Ladestroms und/oder der Ladespannung an Ein- und Ausgang vom Ladegerät und/oder am Eingang der Batterie während des Ladevorganges zur Ermittlung des Leistungsverlustes und vergleicht diesen mit dem aus dem Modell des Leistungsverlustes ermittelten Wert. Bei auftretenden Abweichungen erfolgt eine Adaption der Sollwerttrajektorie. Es ist weiterhin möglich, das Modell zu adaptieren, so dass gemessener und simulierter Leistungsverlust sich annähern.

Eine weitere Ausführungsform der Erfindung berechnet die Batterieparameter, beispielsweise den Innenwiderstand aus den Messwerten für Ladestrom und Ladespannung, wobei weitere Parameter, wie Batterietemperatur oder Gesundheitszustand der Batterie oder gesammelte Informationen über vorhergehende Ladezyklen genutzt werden, um ein spezifisches Batteriemodell zu erstellen, wobei z. B. herstellungsspezifische Streuungen ausgeglichen oder Alterungseffekte beim Betrieb berücksichtigt werden. Die somit für die spezielle Batterie ermittelten Modellparameter können für die Optimierung der Sollwerttrajektorie genutzt werden. Alternativ können Batterieparameter vorbestimmt sein oder von einem Nutzer vordefiniert werden. Weiterhin können batterietypische Standardwerte genutzt werden. Batterieparameter können weiterhin zu einem Ladegerät übertragen werden, z. B. über einen Kommunikationskanal eines Batteriemanagementsystems.

Die Erfindung beschreibt weiterhin einen elektrischen Konverter, welcher in einer bevorzugten Ausführung ein Batterieladegerät ist, welches den vorbeschriebenen Lademodus, der hinsichtlich seiner Energieverluste optimiert ist, ausführt. Der Konverter ist in einer bevorzugten Ausführung ein AC/DC-Wandler. Der Konverter weist dabei eine steuerbare Ausgangsspannung und/oder einen steuerbaren Ausgangsstrom oder eine steuerbare Ausgangsleistung auf, um eine gewünschte Sollwerttrajektorie am Ausgang während der gewünschten Ladedauer vorzugeben. Der Konverter besitzt hierfür eine Steuereinheit, die wenigstens die minimale zur Verfügung stehende Ladezeit und den gewünschten Ladezustand empfangen kann.

Die Eingabe kann dabei über eine Tastatur oder einen Touchscreen des Ladegerätes erfolgen oder die Eingabe erfolgt über ein separates Eingabesystem, welches drahtgebunden oder drahtlos mit dem Ladegerät verbunden ist.

Alternativ können die Daten von einem Batteriemanagementsystem eines Elektrofahrzeugs empfangen werden. Das Ladegerät kann dabei wenigstens den Lademodus ausführen, der eine hinsichtlich der Energieverluste optimierte Sollwerttrajektorie vorgibt. Das Ladegerät kann in einer Ausführungsform Teil einer öffentlich zugänglichen Ladeeinrichtung, z. B. einer Ladesäule eines Parkplatzes sein.

Angenommen, es wird ein Ladegerät zum Laden unterschiedlicher Batterietypen genutzt, beispielsweise ein stationäres Ladegerät für eine Flotte von Flurförderfahrzeugen, umfassend einen Gabelstapler und einen Hubwagen mit Batterien verschiedener Größe bzw. Kapazität, dann werden der Steuereinheit des Ladegeräts bzw. des Konverters für jede dieser unterschiedlichen Batterien, neben der jeweils minimal zur Verfügung stehenden Ladezeit und dem jeweils gewünschten Ladezustand sowie den jeweiligen Kenngrößen der Batterie (Kapazität, maximaler/minimaler Ladestrom, Ladespannung usw.) übermittelt und mittels der Steuereinheit gemäß dem erfindungsgemäßen Verfahren die optimierte Sollwerttrajektorie berechnet, so dass der Ladevorgang für die jeweilige Batterie demgemäß durchgeführt werden kann. Erfindungsgemäß kann die Steuereinheit des Ladegeräts eine Datenbank aufweisen, die z. B. die Kenngrößen der jeweiligen Batterien umfasst, so dass eine Übermittlung dieser Kenngrößen an die Steuereinheit nicht erforderlich ist. Möglich ist es auch, dass diese Datenbank die Kenngrößen jeweils einer bestimmten Klasse von Batterien umfasst. Denkbar ist es außerdem, dass diese Datenbank gemäß dem erfindungsgemäßen Verfahren optimierte Sollwerttrajektorien für die jeweilige Batterie oder Klasse von Batterien umfasst. Beispielsweise können optimierte Sollwerttrajektorien in Abhängigkeit der jeweils minimal zur Verfügung stehenden Ladezeit und dem jeweils gewünschten Ladezustand in der Steuereinheit abgelegt sein. Für den Fall, dass eine bestimmte Batterie mittels unterschiedlicher Ladegeräte aufgeladen wird, beispielsweise die Traktionsbatterie eines Elektrofahrzeugs mittels eines stationären Ladegeräts zu Hause und außerdem mittels eines stationären Ladegeräts, das in einer Ladesäule auf einem öffentlichen Parkplatz zur Verfügung steht, wobei sich diese Ladegeräte unterscheiden, insbesondere hinsichtlich der Ladeleistung oder der Ladespannung usw. ist es zweckmäßig, dass dem Batteriemanagementsystem des Fahrzeugs die Kenngrößen des jeweiligen Ladegerätes übermittelt werden, so dass mittels dieses Systems unter Beachtung der Kenngrößen des jeweiligen Ladegerätes gemäß dem erfindungsgemäßen Verfahren die optimierte Sollwerttrajektorie berechnet wird und diese Informationen wiederum dem jeweiligen Ladegerät übermittelt werden, so dass der Ladevorgang für die jeweilige Batterie mittels des speziellen Ladegeräts demgemäß durchgeführt werden kann. Erfindungsgemäß kann das Batteriemanagementsystem eine Datenbank aufweisen, die z. B. die Kenngrößen des jeweiligen Ladegeräts umfasst, so dass eine Übermittlung dieser Kenngrößen an das Batteriemanagementsystem nicht erforderlich ist. Möglich ist es auch, dass diese Datenbank die Kenngrößen jeweils einer bestimmten Klasse von Ladegeräten umfasst. Denkbar ist es außerdem, dass diese Datenbank gemäß dem erfindungsgemäßen Verfahren optimierte Sollwerttrajektorien für das jeweilige Ladegerät oder Klasse von Ladegeräten umfasst. Beispielsweise können optimierte Sollwerttrajektorien in Abhängigkeit der jeweils minimal zur Verfügung stehenden Ladezeit und dem jeweils gewünschten Ladezustand in dem Batteriemanagementsystem abgelegt sein.

Der Einsatz der dynamischen Programmierung zur Lösung des beschriebenen Optimierungsproblems bedingt eine gewisse Bearbeitungszeit. Daher ist es erfindungsgemäß vorgesehen, dass die Lösung des beschriebenen Optimierungsproblems nicht mittels Steuereinheit des Ladegeräts bzw. mittels des Batteriemanagementsystems des Fahrzeugs erfolgt, sondern mittels eines externen Rechners, der insbesondere ein Superrechner ist. Dazu ist die Steuereinheit des Ladegeräts bzw. das Batteriemanagementsystem des Fahrzeugs beispielsweise über ein Hochgeschwindigkeitsnetzwerk mit diesem externen Rechner verbunden. Denkbar ist es außerdem, mittels eines zentralen Geräts, das sich in einem Fahrzeug befindet, beispielsweise mittels eines Smartphones, die zur Lösung des beschriebenen Optimierungsproblems notwendigen Informationen zu sammeln und dann an den externen Rechner zu übermitteln bzw. die extern optimierte Sollwerttrajektorie wieder zu empfangen und zur Steuerung des Ladegeräts bereitzustellen.

Erfindungsgemäß können zum Laden der Batterie auch mehrere parallel geschaltete Ladegeräte verwendet werden. Das ist insbesondere für eine bessere Anpassung der Ladegeräte an unterschiedliche Batterien zweckmäßig. Erfindungsgemäß wird dadurch der Energieverbrauch bei der Ladung der Batterie minimiert, dass jeweils die optimale Sollwerttrajektorie für den Ladestrom oder die Ladeleistung bzw. den Ausgangsstroms oder die Ausgangsleistung jedes verwendeten Ladegerätes ermittelt wird, so dass die Leistungsverluste minimal sind, wobei insbesondere der Ausgangsstrom jedes verwendeten Ladegerätes entlang dieser optimalen Sollwerttrajektorien geführt wird. D. h. erfindungsgemäß werden die korrespondierenden Ladeströme bzw. -leistungen der verwendeten Ladegeräte ermittelt, welche die Verluste über einen spezifischen Ladezyklus minimieren.

D. h. der erfindungsgemäße Konverter kann so gestaltet sein, dass er mehrere Ladegeräte umfasst, die parallel geschaltet sind, wobei ein Minimum an zur Verfügung stehender Ladezeit und ein Minimum an zu erreichendem Ladezustand vorgegeben werden kann und mittels des Konverters bzw. der Ladegeräte ein hinsichtlich der Energieverluste beim Laden optimiertes Ladeverfahren ausgeführt wird.

Das erfindungsgemäße Verfahren kann auch zum Laden mehrerer unterschiedlicher Batterien bzw. mehrerer in Reihe geschalteter Ladegeräte verwendet werden. D. h. das erfindungsgemäße Verfahren kann auch in Verbindung mit mehreren Teilsystemen angewendet werden, wobei jedes Teilsystem ein Ladegerät und eine Batterie aufweist. Insbesondere kann so zunächst eine innerhalb eines ersten Teilsystems enthaltene erste Batterie mittels des erfindungsgemäßen Verfahrens mit möglichst geringen Verlusten geladen werden. Das erste Teilsystem umfasst ein mit einem Versorgungsnetz verbundenes erstes Ladegerät sowie die erste Batterie. Die erste Batterie ist insbesondere eine Hochvolt-Traktionsbatterie eines Elektrofahrzeuges. Das erste Ladegerät entspricht einem elektrischen Konverter, bevorzugt einem AC/DC-Wandler, der zumindest einen steuerbaren Ausgangsstrom oder eine steuerbare Ausgangsleistung aufweist, um gemäß dem erfindungsgemäßen Verfahren eine gewünschte Sollwerttrajektorie am Ausgang während der gewünschten Ladedauer vorgeben zu können, so dass die Leistungsverluste während des Ladeprozesses minimal sind. D. h. das erste Ladegerät ist eingangsseitig mit einem Versorgungsnetz verbunden, an dem eine Wechselspannung anliegt, wobei das erste Ladegerät ausgangsseitig eine Gleichspannung bzw. einen Gleichstrom zur Ladung der ersten Batterie liefert. Ferner ist mindestens ein zweites Teilsystem vorhanden, das mit dem ersten Teilsystem zusammenwirkt. Insbesondere umfasst das zweite Teilsystem ein zweites Ladegerät, das bevorzugt einem DC/DC-Wandler entspricht sowie eine zweite Batterie, beispielsweise zur Versorgung des Bordnetzes eines Fahrzeuges auf einer Niederspannungsebene, etwa 12 Volt. Das zweite Ladegerät ist eingangsseitig mit dem ersten Teilsystem verbunden. D. h. eingangsseitig liegt an dem zweiten Ladegerät eine Gleichspannung an, die der Ladespannung der ersten Batterie entspricht. Das zweite Ladegerät weist wiederum zumindest einen steuerbaren Ausgangsstrom oder eine steuerbare Ausgangsleistung auf, um gemäß dem erfindungsgemäßen Verfahren eine gewünschte Sollwerttrajektorie am Ausgang während der gewünschten Ladedauer der zweiten Batterie vorgeben zu können, so dass die Leistungsverluste während des Ladeprozesses minimal sind. D. h. es wird der Ladestrom für jede im jeweiligen Teilsystem enthaltene Batterie gemäß dem erfindungsgemäßen Verfahren ermittelt sowie der Ausgangs- bzw. Ladestrom des jeweiligen Ladegerätes entlang einer optimierten Sollwerttrajektorie geführt, so dass die gesamten Leistungsverluste innerhalb jedes Teilsystems minimal sind. Da sich der Ausgangsstrom des ersten Ladegerätes des ersten Teilsystems in den Ladestrom für die erste Batterie in dem ersten Teilsystem und den Eingangsstrom des zweiten Ladegerätes aufteilt, wird natürlich die optimale Sollwerttrajektorie für den Ausgangsstrom des ersten Ladegerätes mittels des erfindungsgemäßen Verfahrens ermittelt bzw. zum Laden der ersten Batterie am Ausgang des ersten Ladegerätes während der gewünschten Ladedauer der ersten Batterie vorgegeben, so dass der erste Ladestrom so geführt wird, dass die Leistungsverluste beim Laden der ersten Batterie minimal sind sowie das zweite Ladegerät versorgt wird, also eine gewisse Eingangsleistung an dem zweiten bzw. jedem weiteren Ladegerät bereitsteht. Weiterhin kann ein drittes oder noch weiteres Teilsystem vorhanden sein, das wiederum mit dem zweiten Teilsystem zusammenwirkt. Weiterhin kann ein noch weiteres Teilsystem vorhanden sein, das wiederum mit dem dritten, also dem jeweils vorhergehenden Teilsystem zusammenwirkt. Die Anzahl der auf diese Weise zusammenwirkenden Teilsysteme ist nicht begrenzt.

Die Erfindung wird nachfolgend anhand von bevorzugten Ausführungsbeispielen beschrieben. Der genaue Schutzumfang wird durch die Ansprüche festgelegt.

Figur 1 zeigt dabei eine Grundstruktur des Ladesystems.

Figur 2 zeigt ein einfaches Ersatzschaltbild des Ladesystems.

Figur 3 zeigt die resultierende Sollwerttrajektorie in einem 3-dimensionalen Kennfeld unter Nutzung der Hamilton-Funktion zur Formulierung und Lösung des Optimierungsproblems.

Figur 4 zeigt die resultierende Sollwerttrajektorie in einem 3-dimensionalen Kennfeld unter Nutzung der Optimierung hinsichtlich maximaler Effizienz.

Figur 5 und 13 zeigen schematische Darstellungen rekursiver Algorithmen.

Figur 6 zeigt die resultierende Sollwerttrajektorie in einem 3-dimensionalen Kennfeld unter Nutzung der Methode der dynamischen Programmierung nach Bellmann.

Figur 7 zeigt Leistungs- und Energieverluste für verschiedene Lademodi.

Figur 8 zeigt den Ladezustandsverlauf und Sollwerttrajektorie für verschiedene Lademodi.

Figur 9 zeigt die Energieverluste für verschiedene Lademodi im Vergleich.

Figur 10 und 12 zeigen weitere einfache Ersatzschaltbilder des Ladesystems.

Figur 11 zeigt den Verlauf der Sollwerttrajektorien des Ladestroms bei Nutzung mehrerer Ladegeräte.

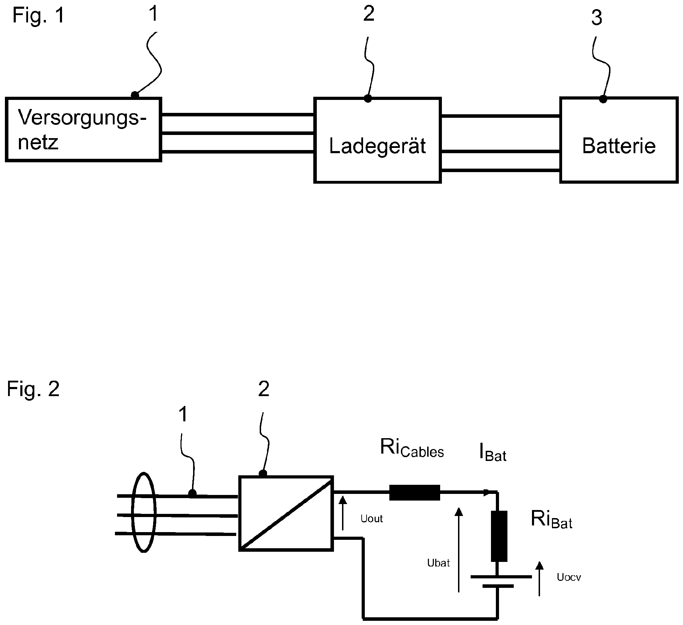

Figur 1 zeigt eine Grundstruktur eines Ladesystems. Ein Ladegerät 2 ist mit einem Versorgungsnetz 1 und einer Batterie 3 verbunden. Das Ladegerät 2 hat einen Wechselstromeingang und einen Gleichstromausgang.

Figur 2 zeigt ein einfaches Ersatzschaltbild eines Ladesystems. Das Ladegerät 2 ist als Black-box zwischen einem Versorgungsnetz 1 und einer auszugebenden Ausgangsspannung $U_{Out}$ dargestellt. Die Batterie wird als Ersatzschaltung über Batteriespannung $U_{Bat}$ und Innenwiderstand $Ri_{Bat}$ beschrieben. Die Systemgleichungen des Batteriesystems können daher wie folgt dargestellt werden.

Die Ableitung ($\dot{SOC}$) des Ladezustandes ($SOC$) der Batterie wird durch die dynamische Gleichung:

$$S\dot{O}C = \frac{1}{Q_{Bat}} \cdot \frac{U_{OCV} - \sqrt{U_{OCV}^2 - 4.Ri_{Bat}.P_{Bat}}}{2.Ri_{Bat}}$$ beschrieben, wobei

$U_{OCV}$ die Leerlaufspannung der Batterie,

$I_{Bat}$ der Ladestrom,

$Ri_{Bat}$ der Innenwiderstand der Batterie, der eine Funktion des Ladezustandes *SOC,* des Gesundheitszustands *SOH* und der Batterietemperatur T ist,

$P_{Bat}$ die Ladeleistung, welche über das Produkt von $U_{Bat}$ x $I_{Bat}$ beschrieben wird, ist.

Der Ladezustand *SOC* kann damit durch das Integral $SOC = \int_{t0}^{tf} S\dot{O}C(t).dt$ beschrieben werden. Das Integral der Ladezustandsänderung ($S\dot{O}C$) wird zwischen einer Startzeit to und einer Endzeit tf des Ladeprozesses gebildet. Der Spannungsabfall über der Batterie $U_{Bat}$ ist abhängig vom Ladezustand *SOC* und der Ladeleistung $P_{Bat}$ bzw. vom Ladestrom $I_{Bat}$ und kann geschrieben werden als $U_{Bat} = f(SOC,P_{Bat})$.

Das Ladegerät kann mittels eines Wirkungsgradmodells beschrieben werden. Das Ladegerät wird mittels seiner Ladeausgangsleistung $P_{Out}$ auf der DC-Seite (Gleichstromseite) und der Eingangsleistung auf der Wechselstromseite

$$P_{AC} = \frac{P_{Out}}{\eta_{\text{Charger}}}$$

AC-Seite $P_{AC}$ und einem Wirkungsgrad des Ladegerätes $\eta_{\text{Charger}}$ beschrieben und kann damit als formuliert werden.

Der Wirkungsgrad des Ladegerätes $\eta_{\text{Charger}}$ weist wenigstens eine Abhängigkeit vom Ausgangsstrom $I_{out}$ der Gleichstromseite auf. Weitere mögliche Einflussgrößen können die Ausgangsspannung $U_{out}$ der Gleichstromseite, die Eingangsspannung $U_{AC}$ der Wechselstromseite und der Eingangsstrom der Wechselstromseite $I_{AC}$ sein. Betrachtet man alle genannten Einflussgrößen, so kann der Wirkungsgrad des Ladegerätes als $\eta_{\text{Charger}}$ zu $\eta_{\text{Charger}} = g(U_{AC},U_{out},I_{AC},I_{out})$ formuliert werden.

Ein Modell, welches die gesamten Leistungsverluste ($P_{losses}$) summiert, ergibt sich aus der Addition von $P_{Losses\_charger} + P_{losses\_Cable} + P_{losses\_Battery}$ den Leistungsverlusten des Ladegerätes, der Batterie und der Zuleitungen. Es kann mit den folgenden Gleichungen beschrieben werden.

$$P_{losses} = P_{Losses\_Ch\arg er} + P_{losses\_Cable} + P_{losses\_Battery}$$

$$P_{losses} = P_{Losses\_Ch\arg er} + R_{cables}.I_{Bat}^2 + Ri_{Bat}.I_{Bat}^2$$

$$P_{losses} = U_{out}.I_{bat}.\left(\frac{1}{\eta_{ch\arg er}} - 1\right) + R_{cables}.I_{Bat}^2 + Ri_{Bat}.I_{Bat}^2$$

$$P_{losses} = \left(R_{cables}.I_{Bat}^2 + U_{bat}.I_{bat}\right)\left(\frac{1}{\eta_{ch\arg er}} - 1\right) + R_{cables}.I_{Bat}^2 + Ri_{Bat}.I_{Bat}^2$$

Dabei bezeichnet $R_{Cables}$ den ohmschen Widerstand der Zuleitungen.

Ein globaler Wirkungsgrad $\eta_{\text{global}}$ kann damit definiert werden zu

$$\eta_{\text{global}} = \frac{P_{stored}}{P_{AC}} = \frac{P_{stored}}{P_{out}}.\eta_{\text{Charger}} \cdot$$

Die in der Batterie eingespeicherte Leistung $P_{stored}$ ergibt sich aus der der Batterie zugeführten Leistung, vermindert um die Leistungsverluste in der Batterie. Weiterhin wird aus der Ausgangsleistung des Ladegerätes $P_{Out}$ als Summe der der Batterie zugeführten Leistung und der Leistungsverluste in den Zuleitungen der Wirkungsgrades des

$$\eta_{\text{global}} = \frac{U_{Bat}.I_{Bat} - Ri_{Bat}.I_{Bat}^2}{U_{Bat}.I_{Bat} + R_{cables}.I_{Bat}^2}.\eta_{\text{Charger}}$$

Ladegerätes $\eta_{\text{Charger}}$ zu                                                 beschrieben.

Die Modellgleichungen werden genutzt, um eine Ladestrategie zu generieren, welche hinsichtlich der Leistungsverluste beim Laden optimiert wird. Die Lösung des Optimierungsproblems führt zu einer Ladestrategie mit einem Minimum an Energieverlusten beim Laden. Eine optimierte Sollwerttrajektorie von Ladestrom $I_{Bat}$ und/oder Ladespannung $U_{Bat}$ oder Ladeleistung $P_{Bat}$ kann generiert werden, um eine Batterie in einer zur Verfügung stehenden Ladezeit bis zu einem gewünschten Ladezustand SOC aufzuladen. Die folgenden Beispiele beschreiben verschiedene Optimierungsverfahren zum Generieren der oben beschriebenen optimierten Sollwerttrajektorie. Die Sollwerttrajektorie von Ladestrom $I_{Bat}$ und/oder Ladespannung $U_{Bat}$ oder Ladeleistung $P_{Bat}$ kann hinsichtlich der Leistungsverluste $P_{Losses}$ zu einem Optimum geführt werden, wenn die zur Verfügung stehende Ladezeit ausreichend lang ist.

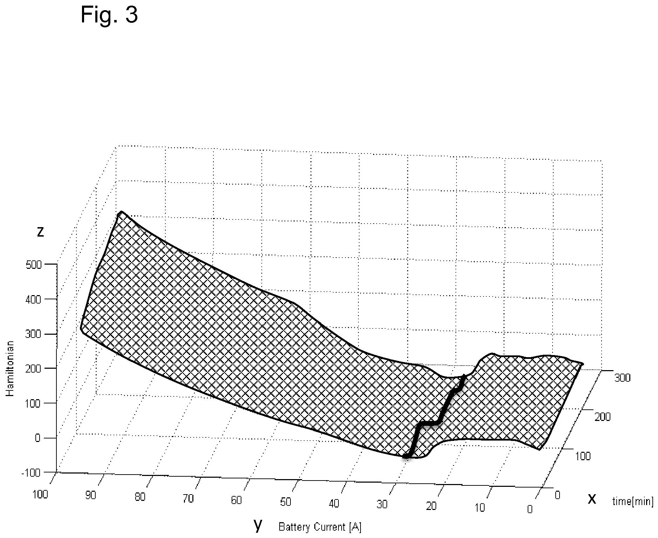

Figur 3 zeigt ein 3-dimensionales Kennfeld mit einer Sollwerttrajektorie (durchgezogene schwarze Linie) des Ladestroms $I_{Bat}$ zum Laden einer Batterie, welche aus einer Minimumbetrachtung der Leistungsverluste $P_{Losses}$ resultiert. Formulierung und Lösung des Optimierungsproblems erfolgen nach Hamilton. Die Sollwerttrajektorie ist jeweils entlang des Minimums der Kosten zum Laden der Batterie in der zur Verfügung stehenden Zeit geführt. Die Figur zeigt eine Sollwerttrajektorie des Ladestroms $I_{Bat}$, welche in Abhängigkeit der Leistungsverluste $P_{Losses}$ zum jeweiligen Zeitpunkt der Ladezeit generiert wird. Das Modell der Leistungsverluste zum Laden der Batterie kann durch das 3-dimensionale Kennfeld dargestellt werden. Auf der z-Achse ist der Wert des Hamilton-Kriteriums als Ausdruck der Kosten dargestellt, die y-Achse zeigt den Ladestrom $I_{Bat}$ und die x-Achse die Zeit in Minuten.

Als Gütemaß J wird das Minimum der Energieverluste durch die Minimierung der integrierten Leistungsverluste $P_{Losses}$ durch

$$J = \min[\int_{t_0}^{t_f} P_{Losses}(t).dt]]$$

$$t_f = t\big|_{SOC=x\%}$$

$$t_0 = t\big|_{SOC=y\%}$$

beschrieben, wobei die Endzeit des Ladevorgangs $t_f$ definiert ist als Zeitpunkt, zu dem ein gewünschter Ladezustand SOC=x% erreicht wird. Die Startzeit to des Ladevorgangs beschreibt den Beginn zu einem Ladezustand SOC=y%. Zur Lösung wird die Hamilton-Funktion H zu

$H = P_{Losses} - p.S\dot{O}C$ formuliert, wobei die Leistungsverluste $P_{Losses}$ zu den Kosten, eine spezifische Änderung des Ladezustands SOC zu erreichen, in Relation gesetzt werden. Der Faktor p beschreibt die Kozustandsvariable (costate variable), welche die Kosten zum Erreichen eines spezifischen Ladezustandes zu einem früheren Zeitpunkt

$$\dot{p} = -\frac{\partial H}{\partial SOC}.$$

wichtet. Dessen Ableitung $\dot{p}$ wird formuliert durch                     Der Ladezustand SOC kann, wie zu Figur 2 beschrieben, formuliert werden.

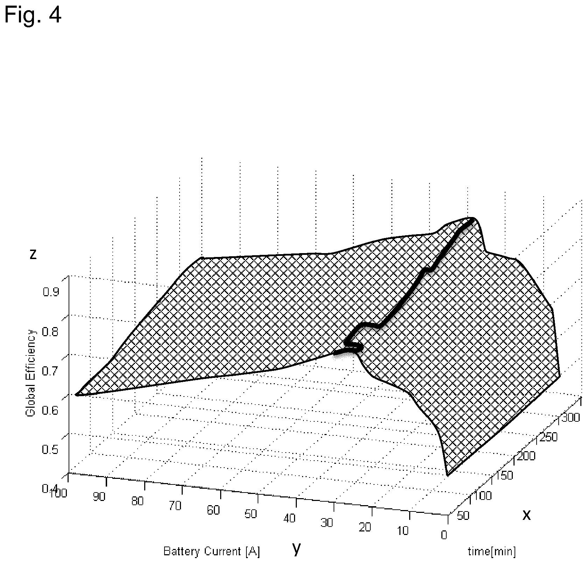

Figur 4 zeigt in einem 3-D-Kennfeld eine Sollwerttrajektorie (schwarze durchgezogene Linie) für den Ladestrom $I_{Bat}$ zum Laden einer Batterie. Das Kennfeld wurde durch eine Betrachtung maximalen Wirkungsgrades erhalten. Die Sollwerttrajektorie wurde erhalten durch Führung des Ladestroms $I_{Bat}$ entlang eines Sollwertes, bei dem der Ladewirkungsgrad optimal ist, wobei als Bedingung das Erreichen eines bestimmten Ladezustandes SOC in einer zur Verfügung stehenden Zeit gesetzt wird. Die Figur zeigt den Ladestromsollwert, welcher hinsichtlich seines Verlaufes vom Wirkungsgrad zum jeweiligen Zeitpunkt abhängt. Das Modell der Leistungsverluste $P_{Losses}$ wird durch den Gesamtwirkungsgrad $\eta_{\text{global}}$ zum Laden der Batterie beschrieben. Das 3D-Kennfeld visualisiert das gebildete Modell für einen beispielhaften Ladevorgang, wobei auf der z-Achse der Gesamtwirkungsgrad $\eta_{\text{global}}$ beim Laden, auf der y Achse der Ladestrom $I_{Bat}$ und auf der x-Achse die Zeit dargestellt ist. Das Kennfeld wird durch die nachfolgend beschriebenen Gleichungen erhalten.

$$\eta_{\text{global}} = \frac{U_{Bat}.I_{Bat} - Ri_{Bat}.I_{Bat}^2}{U_{Bat}.I_{Bat} + R_{cables}.I_{Bat}^2}.\eta_{\text{Charger}}$$

Der Gesamtwirkungsgrad $\qquad$ wird zur Formulierung des Gütemaßes J für den minimalen Energieverbrauch beim Laden genutzt. Damit ergibt

$$J = \min[\int_{t_0}^{t_f} P_{Losses}(t).dt] = \min[\int_{t_0}^{t_f} P_{stored}(t).(\frac{1}{\eta_{\text{global}}(t)} - 1).dt]$$

sich $t_f = t|_{SOC=100\%}$

$t_0 = t|_{SOC=0\%}$

wobei $P_{stored}(t)$ die zu einem bestimmten Zeitpunkt in die Batterie eingespeiste Leistung beschreibt.

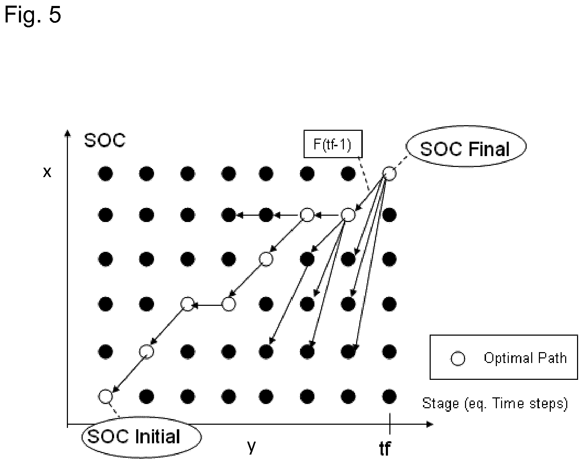

Figur 5 zeigt eine schematische Darstellung eines rekursiven Algorithmus in einem Diagramm, indem auf der y-Achse der Ladezustand SOC und auf der x-Achse die Ladezeit aufgetragen ist. Rekursive Optimierungsalgorithmen starten vom Ende des Prozesses, welches hier der Ladezustand SOC ist, der dem gewünscht zu erreichenden Endladezustand SOC_Final entspricht, wobei ein optimaler Weg zum Startpunkt SOC_Initial gesucht wird, bei welchem in Abhängigkeit von der Sollwerttrajektorie von Ladestrom $I_{Bat}$ und/oder Ladespannung $U_{Bat}$ oder Ladeleistung $P_{Bat}$ ein hinsichtlich der Energieverluste minimierter Ladevorgang generiert wird. Das Beispiel beschreibt die Methode der dynamischen Programmierung nach Bellmann. Der optimale Weg zum Startpunkt wird gefunden, indem das Optimierungsproblem in eine Vielzahl von Teilaufgaben zerlegt wird. Die Änderung des Ladezustandes $S\dot{O}C$ in jedem Optimierungsschritt wird mit den dabei auftretenden Leistungsverlusten $P_{Losses}$ beim Laden bewertet. Der optimale Pfad für die Sollwerttrajektorie von Ladestrom $I_{Bat}$ und/oder Ladespannung $U_{Bat}$ oder Ladeleistung $P_{Bat}$ wird ermittelt, indem in jedem Schritt die größtmögliche Änderung des Ladezustandes $S\dot{O}C$ für die geringsten dabei auftretenden Leistungsverluste $P_{Losses}$ gesucht wird. Es kann ein Beschleunigungsfaktor alpha verwendet werden, der von der Zeit bis zum Erreichen des Ladezustandes SOC abhängig ist. Die Wertefunktion V wird entsprechend der nachfolgenden Gleichungen für den jeweils vorhergehenden Zeitpunkt (t-1) ermittelt. Rekursiv wird deren Wert mit der Funktion F des Gewinns, also der maximalen Ladezustandsänderung unter Berücksichtigung der dabei auftretenden Leistungsverluste berechnet. Der Faktor alpha wird aus der Endzeit tf zum Erreichen des gewünschten Ladezustandes bestimmt. Die Wertefunktion V hat zum Endzeitpunkt $t_f$ dabei einen applizierbaren Wert $V_F$, welcher dem zu erreichenden Ladezustand SOC entspricht.

$$S\dot{O}C = \frac{1}{Q_{bat}} \cdot \frac{U_{OCV} - \sqrt{U^2_{OCV} - 4Ri_{Bat}U_{bat}.I_{Bat}}}{2Ri_{Bat}}$$

$$V(S\dot{O}C\ (t)) = \max(F(S\dot{O}C, I_{Bat}) + V(S\dot{O}C\ (t+1)))$$

$$F(S\dot{O}C, I_{Bat}) = \alpha\ S\dot{O}C - P_{Losses}$$

$$V(S\dot{O}C\ (t_f)) = V_F$$

F beschreibt dabei die Funktion des Gewinns, welche von einem Zeitpunkt t+1 rekursiv zum Zeitpunkt t führt.

$I_{Bat}$ wird dabei so gewählt, dass der jeweils nächste Optimierungsschritt mit einem Maximum an Gewinn erfolgt, wobei dieser als Ladezustandsänderung $S\dot{O}C$ in Relation zu den auftretenden Leistungsverlusten $P_{Losses}$ definiert wird. Die so gefundene Sollwerttrajektorie führt vom finalen Ladezustand zum Ausgangspunkt und kann zeitlich invertiert als Sollwerttrajektorie zum Laden genutzt werden.

Die Figur 5 verdeutlicht schematisch den Algorithmus, indem ausgehend von der Endzeit $t_f$ und dem gewünschten Ladezustand SOC zu dieser Zeit eine Sollwerttrajektorie gefunden werden soll, welche der oben beschriebenen Optimierung folgt. Die weißen Kreise symbolisieren hierbei den optimalen Pfad zum Startpunkt.

Alternativ kann das Modell der Leistungsverluste $P_{Losses}$ beim Laden empirisch durch eine Vielzahl von Versuchen gebildet werden. Hierfür werden zum Test Ladezyklen aufgenommen und es erfolgt die Aufnahme von Messwerten des Ladestroms $I_{Bat}$ und/oder der Ladespannung $U_{Bat}$ oder der Ladeleistung $P_{Bat}$ und eine Ermittlung der zugehörigen Leistungsverluste $P_{Losses}$ sowie ggf. die Messung weiterer Einflussgrößen, wie Temperatur, Ladezustand etc., so dass die spezifischen Leistungsverluste in einem x-dimensionalen Modell der Einflussgrößen abgebildet werden können. Aus dem Modell kann dann eine Sollwerttrajektorie des Ladestroms $I_{Bat}$ und/oder der Ladespannung $U_{Bat}$ oder der Ladeleistung $P_{Bat}$ ermittelt werden, wobei die mittels des Modells erhaltenen spezifischen Leistungsverluste $P_{Losses}$ berücksichtigt werden.

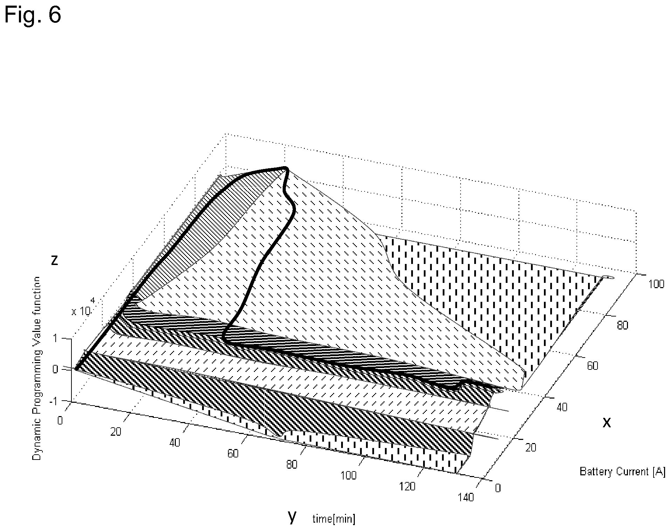

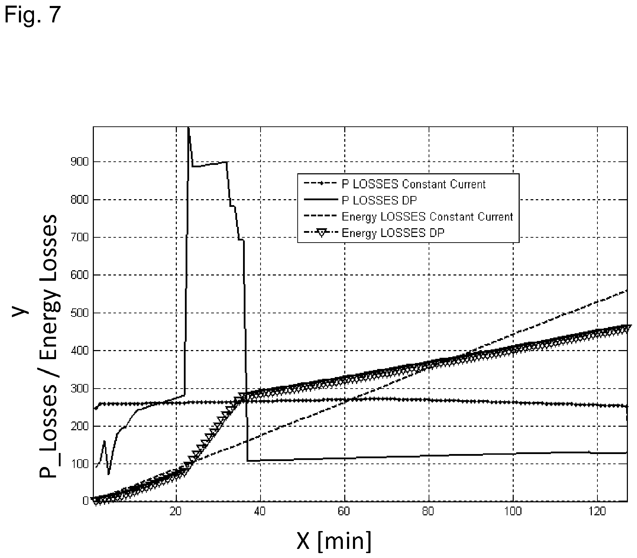

Figur 6 beschreibt den Verlauf einer Sollwerttrajektorie des Ladestroms $I_{Bat}$, wie er gemäß der zu Fig. 5 beschriebenen dynamischen Programmierung nach Bellman für beispielhafte Randbedingungen ermittelt wurde. Die x-Achse des 3-dimensionalen Kennfeldes beschreibt den Ladestromsollwert zur Batterie gemessen in Ampere. Die y-Achse bildet die Zeit, gemessen in Minuten, ab. Die z-Achse beschreibt den Wert der Wertefunktion V. Gemäß der Optimierungsaufgabe wird der Sollwert des Ladestroms $I_{Bat}$ nahe dem Maximum der Wertefunktion V geführt, um in der zur Verfügung stehenden Zeit den gewünschten Ladezustand zu erreichen. Figur 7 zeigt vergleichend Energie- und Leistungsverluste einer Konstantstromladung und dem oben zu Figur 5 und 6 beschriebenen Algorithmus zur Erzeugung einer Sollwerttrajektorie für den Ladestrom $I_{Bat}$ unter Nutzung der dynamischen Programmierung. Die dargestellte durchbrochene Linie ergänzt um kleine aufgesetzte Quadrate beschreibt die Leistungsverluste $P_{Losses}$ in Watt beim Laden mit einem Konstantstrom, welcher über die auf der x-Achse dargestellte Ladezeit von 130 Minuten nahezu gleichbleibend ist. Der zugehörige Energieverlust, welcher durch die strichliert dargestellte Linie symbolisiert ist, zeigt entsprechend einen nahezu linearen Anstieg. Leistungs- $P_{Losses}$ und Energieverlust sind auf der y-Achse abgebildet, wobei der Energieverlust nur qualitativ ohne Bezug zu den Zahlenwerten des Leistungsverlustes aufgetragen ist. Die Sollwerttrajektorie des Ladestroms $I_{Bat}$, welche zu Figur 6 beschrieben wurde, erzeugt einen Verlauf der Leistungsverluste $P_{Losses}$ entsprechend der durchgezogen dargestellten Kurve. Hieraus ergibt sich ein zugehöriger Verlauf des Energieverlustes, der als unterbrochene Linie mit aufgesetzten Dreiecken dargestellt ist. Der jeweilige Endpunkt der Energieverlustkurven zeigt den auftretenden Energieverlust, um den gleichen Ladezustand SOC zu erreichen. Der Verlauf des Energieverlustes, erzeugt durch eine optimierte Sollwerttrajektorie des Ladestroms $I_{Bat}$ gemäß Figur 6, erzeugt in Summe am Ende der Ladezeit einen geringeren Energieverlust verglichen mit dem Konstantstromalgorithmus.

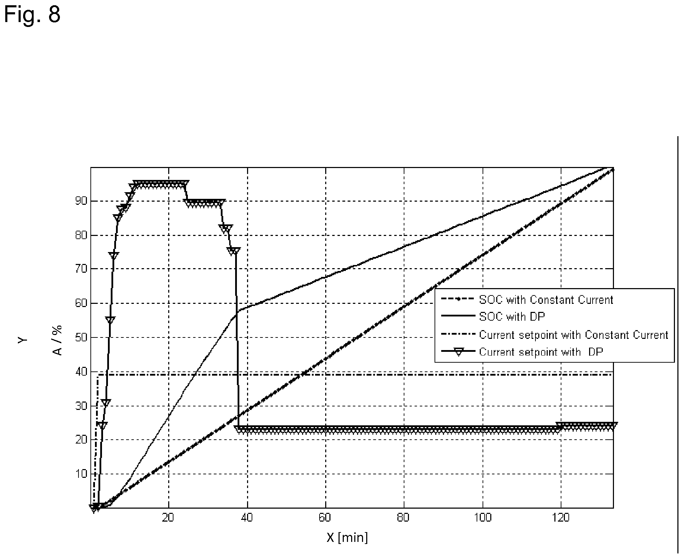

Figur 8 zeigt den Verlauf des Ladestroms $I_{Bat}$ in Ampere und weiterhin den Verlauf des Ladezustandes SOC in % auf der y-Achse während der Ladezeit (x-Achse). Die Ladezustandskurven führen am Ende der Ladezeit von 130 Minuten zum gleichen Ladezustand SOC von 100%. Die unterbrochene Linie mit aufgesetzten Quadraten zeigt den Ladezustandsverlauf in Abhängigkeit von der Ladezeit, welcher durch einen konstanten Ladestrom $I_{Bat}$ erzeugt wurde. Die durchgezogene Linie zeigt die Ladezustandskurve, welche durch Laden der Batterie mittels einer durch dynamische Programmierung optimierten Sollwerttrajektorie des Ladestroms $I_{Bat}$ erzeugt wurde. Die Sollwerttrajektorie des Ladestroms $I_{Bat}$ bei Konstantstromladung ist als unterbrochene Linie nahezu parallel zur x-Achse (Zeit-Achse) aufgezeigt. Die durchgezogene Linie zeigt die optimierte Sollwerttrajektorie des Ladestroms $I_{Bat}$ optimiert mit dem Optimierungsalgorithmus der dynamischen Programmierung. Beide Sollwerttrajektorien führen am Ende des Ladevorgangs zum gleichen Ladezustand SOC.

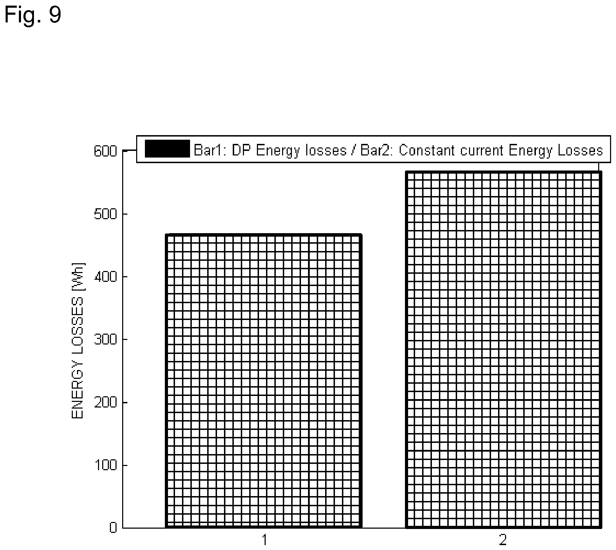

Figur 9 zeigt die Energieverluste gemessen in Wh, welche mittels zweier Säulen dargestellt sind. Säule 1 zeigt den Energieverlust, welcher durch Laden der Batterie mittels einer durch dynamische Programmierung optimierten Sollwerttrajektorie des Ladestroms $I_{Bat}$ erzeugt wurde. Säule 2 beschreibt den Energieverlust beim Laden der Batterie auf den gleichen Ladezustand mittels eines Konstantstromalgorithmus.

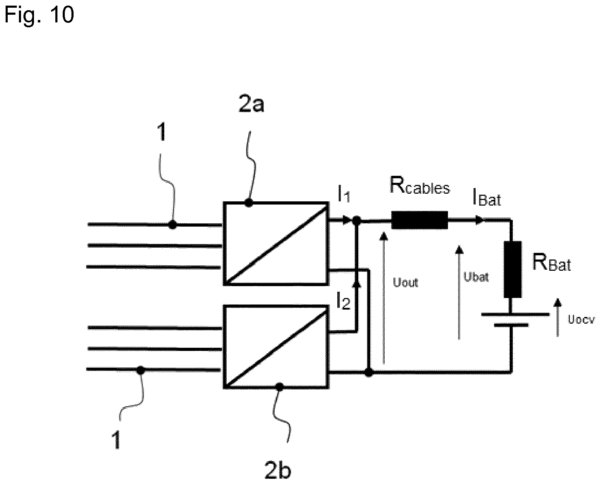

Figur 10 zeigt ein einfaches Ersatzschaltbild eines Ladesystems mit einem ersten Ladegerät 2a und einem zweiten Ladegerät 2b. Die beiden Ladegeräte 2a und 2b sind als Black-box zwischen einem Versorgungsnetz 1 und einer auszugebenden Ausgangsspannung $U_{Out}$ dargestellt. Die Batterie wird als Ersatzschaltung über Batteriespannung $U_{Bat}$ und Innenwiderstand $R_{Bat}$ beschrieben. Die Systemgleichungen dieses Batteriesystems können daher wie folgt dargestellt werden.

Die Ableitung ($S\dot{O}C$) des Ladezustandes ($SOC$) der Batterie wird durch die dynamische Gleichung:

$$S\dot{O}C = \frac{1}{Q_{Bat}} \cdot \frac{U_{OCV} - \sqrt{U_{OCV}^2 - 4.Ri_{Bat}.P_{Bat}}}{2.Ri_{Bat}}$$

beschrieben, wobei

$I_{Bat}$ der Ladestrom ist, der sich aus der Summe der Ladeströme $I_1$ bzw. $I_2$ gemäß der beliebig großen Anzahl der jeweils verwendeten Ladegeräte ergibt und $P_{Bat}$ die Ladeleistung ist, welche über das Produkt von $U_{Bat}$ x $I_{Bat}$ beschrieben wird.

Der Ladezustand $SOC$ kann damit durch das Integral $SOC = \int_{t0}^{tf} S\dot{O}C(t).dt$ beschrieben werden. Das Integral der Ladezustandsänderung ($S\dot{O}C$) wird zwischen einer Startzeit to und einer Endzeit tf des Ladeprozesses gebildet. Der Spannungsabfall über der Batterie $U_{Bat}$ ist abhängig vom Ladezustand $SOC$ und der Ladeleistung $P_{Bat}$ bzw. vom Ladestrom $I_{Bat}$ und kann als $U_{Bat} = f(SOC, P_{Bat})$ geschrieben werden. Das jeweilige Ladegerät 2a bzw. 2b kann mittels eines Wirkungsgradmodells beschrieben werden. Das jeweilige Ladegerät 2a bzw. 2b wird mittels seiner Ladeausgangsleistung $P_{out\_1}$ bzw. $P_{Out\_2}$ auf der DC-Seite (Gleichstromseite) und der Eingangsleistung auf der Wechselstromseite AC-Seite $P_{AC\_1}$ bzw. $P_{AC\_2}$ und einem Wirkungsgrad des Ladegerätes $\eta_{Charger\_1}$ bzw. $\eta_{Charger\_2}$ beschrieben und kann

$$P_{AC\_1} = \frac{P_{Out\_1}}{\eta_{Charger\_1}} \text{ bzw. } P_{AC\_2} = \frac{P_{Out\_2}}{\eta_{Charger\_2}}$$

damit als formuliert werden. Die Ladeleistung $P_{Bat}$ ergibt sich demnach aus

$P_{Bat} = P_{Out\_1} + P_{Out\_2} - (R_{eables}) \cdot I_{Bat}^2$, wobei $R_{Cables}$ den ohmschen Widerstand der Zuleitungen beschreibt.

Der Wirkungsgrad des Ladegerätes $\eta_{Charger\_1}$ bzw. $\eta_{Charger\_2}$ weist wenigstens eine Abhängigkeit vom Ausgangsstrom $I_1$ bzw. $I_2$ der Gleichstromseite auf. Weitere mögliche Einflussgrößen können die Ausgangsspannung $U_{out}$ der Gleichstromseite, die Eingangsspannung $U_{AC}$ der Wechselstromseite und der jeweilige Eingangsstrom der Wechselstromseite $I_{AC}$ sein. Betrachtet man alle genannten Einflussgrößen, so kann der Wirkungsgrad des Ladegerätes als $\eta_{Charger\_1} = g(U_{AC}, U_{out}, I_{AC}, I_1)$ bzw. $\eta_{Charger\_2} = h(U_{AC}, U_{out}, I_{AC}, I_2)$ formuliert werden. Die Ausgangsspannung $U_{out}$ auf der Gleichstromseite ergibt sich aus $U_{out} = U_{Bat} + R_{cables} \cdot I_{Bat}$.

Ein Modell, welches die gesamten Leistungsverluste $P_{Losses}$ summiert, ergibt sich aus der Addition von $P_{Losses\_Charger\_1} + P_{Losses\_Charger\_2} + P_{Losses\_Cable} + P_{Losses\_Battery}$ den Leistungsverlusten der mehreren Ladegeräte 2a und 2b, der Batterie und der Zuleitungen. Es kann mit den folgenden Gleichungen beschrieben werden.

$$P_{Losses} = P_{Losses\_Charger\_1} + P_{Losses\_Charger\_2} + P_{Losses\_Cable} + P_{Losses\_Battery}$$

$$P_{Losses} = P_{Losses\_Charger\_1} + P_{Losses\_Charger\_2} + R_{cables}.I_{Bat}^2 + Ri_{Bat}.I_{Bat}^2$$

$$P_{Losses} = U_{out}.I_1.\left(\frac{1}{\eta_{charger-1}} - 1\right) + U_{out}.I_2.\left(\frac{1}{\eta_{charger-2}} - 1\right) + R_{cables}.I_{Bat}^2 + Ri_{Bat}.I_{Bat}^2$$

Im weiteren Verlauf wird, wie schon für den Einsatz eines einzigen Ladegerätes 2 beschrieben, für den Einsatz mehrerer Ladegeräte 2a bzw. 2b eine Ladestrategie generiert, welche hinsichtlich der Leistungsverluste beim Laden optimal ist. D. h. die Lösung eines Optimierungsproblems führt zu einer Ladestrategie mit einem Minimum an Energieverlusten beim Laden. Eine optimierte Sollwerttrajektorie des jeweiligen Ladestroms $I_1$ des ersten Ladegerätes 2a sowie des Ladestroms $I_2$ des zweiten Ladegerätes 2b oder der jeweiligen Ladeleistung $P_{Out\_1}$ des ersten Ladegerätes 2a bzw. $P_{Out\_2}$ des zweiten Ladegerätes 2b kann generiert werden, um eine Batterie in einer zur Verfügung stehenden Ladezeit bis zu einem gewünschten Ladezustand SOC aufzuladen. Im weiteren Verlauf wird als mögliches Optimierungsverfahren zum Generieren der oben beschriebenen optimierten Sollwerttrajektorien ein rekursiver Algorithmus bzw. die dynamische Programmierung nach Bellmann verwendet, wie schon im Zusammenhang mit dem Einsatz eines einzigen Ladegerätes 2 in Verbindung mit Figur 5 und 6 dargestellt wurde. D. h. ein rekursiver Algorithmus bzw. die dynamische Programmierung nach Bellmann ist geeignet, für eine beliebige Anzahl an Ladegeräten jeweils die Sollwerttrajektorien zu ermitteln, um die gesamten Leistungsverluste $P_{Losses}$ zu minimieren.

D. h. es wird wieder auf Figur 5 Bezug genommen. Figur 5 zeigt eine schematische Darstellung eines rekursiven Algorithmus in einem Diagramm, indem auf der y-Achse der Ladezustand SOC und auf der x-Achse die Ladezeit aufgetragen ist. Rekursive Optimierungsalgorithmen starten vom Ende des Prozesses, welches hier der Ladezustand SOC ist, der dem gewünscht zu erreichenden Endladezustand SOC_Final entspricht, wobei ein optimaler Weg zum Startpunkt SOC_Initial gesucht wird, bei welchem in Abhängigkeit von der Sollwerttrajektorie von Ladestrom $I_1$ oder Ladeleistung $P_{Out\_1}$ des ersten Ladegerätes bzw. in Abhängigkeit von der Sollwerttrajektorie von Ladestrom $I_2$ oder Ladeleistung $P_{Out\_2}$ des zweiten Ladegerätes ein hinsichtlich der Energieverluste minimierter Ladevorgang generiert wird. D. h. die hier beschriebene Methode der dynamischen Programmierung nach Bellmann ist geeignet, sowohl die optimale Sollwerttrajektorie für den Ladestrom $I_1$ oder Ladeleistung $P_{Out\_1}$ des ersten Ladegerätes, als auch die optimale Sollwerttrajektorie für den Ladestrom $I_2$ oder Ladeleistung $P_{Out\_2}$ des zweiten Ladegerätes zu ermitteln. Der optimale Weg zum Startpunkt wird jeweils gefunden, indem das Optimierungsproblem in eine Vielzahl von Teilaufgaben zerlegt wird. Die Änderung des Ladezustandes $\dot{SOC}$ in jedem Optimierungsschritt wird mit den dabei auftretenden Leistungsverlusten $P_{Losses}$ beim Laden bewertet. Der optimale Pfad für die jeweilige Sollwerttrajektorie von Ladestrom $I_1$ bzw. $I_2$

oder Ladeleistung $P_{Out\_1}$ bzw. $P_{Out\_2}$ wird ermittelt, indem in jedem Schritt die größtmögliche Änderung des Ladezustandes $\dot{SOC}$ für die geringsten dabei auftretenden Leistungsverluste $P_{Losses}$ gesucht wird. Es kann ein Beschleunigungsfaktor alpha verwendet werden, der von der Zeit bis zum Erreichen des Ladezustandes SOC abhängig ist. Die Wertefunktion V wird entsprechend der nachfolgenden Gleichungen für den jeweils vorhergehenden Zeitpunkt (t-1) ermittelt. Rekursiv wird deren Wert mit der Funktion F des Gewinns, also der maximalen Ladezustandsänderung unter Berücksichtigung der dabei auftretenden Leistungsverluste berechnet. Der Faktor alpha wird aus der Endzeit tf zum Erreichen des gewünschten Ladezustandes bestimmt.

F beschreibt dabei die Funktion des Gewinns, welche von einem Zeitpunkt t+1 rekursiv zum Zeitpunkt t führt. Der Ladestrom $I_1$ bzw. $I_2$ wird dabei so gewählt, dass der jeweils nächste Optimierungsschritt mit einem Maximum an Gewinn erfolgt, wobei dieser als Ladezustandsänderung $\dot{SOC}$ in Relation zu den auftretenden Leistungsverlusten $P_{Losses}$ definiert wird. Die so gefundene jeweilige Sollwerttrajektorie führt vom finalen Ladezustand zum Ausgangspunkt und kann zeitlich invertiert als jeweilige Sollwerttrajektorie zum Laden genutzt werden.

$$\dot{SOC} = \frac{1}{Q_{bat}} \cdot \frac{U_{OCV} - \sqrt{U^2{}_{OCV} - 4Ri_{Bat}U_{bat}.I_{Bat}}}{2Ri_{Bat}}$$

$$V(\dot{SOC}(t)) = \max_{I_1,I_2}(F(SOC, I_1, I_2) + V(\dot{SOC}\ (t+1)))$$

$$F(\dot{SOC}, I_1, I_2) = \alpha\ \dot{SOC} - P_{Losses}(\dot{SOC}(t), I_1, I_2)$$

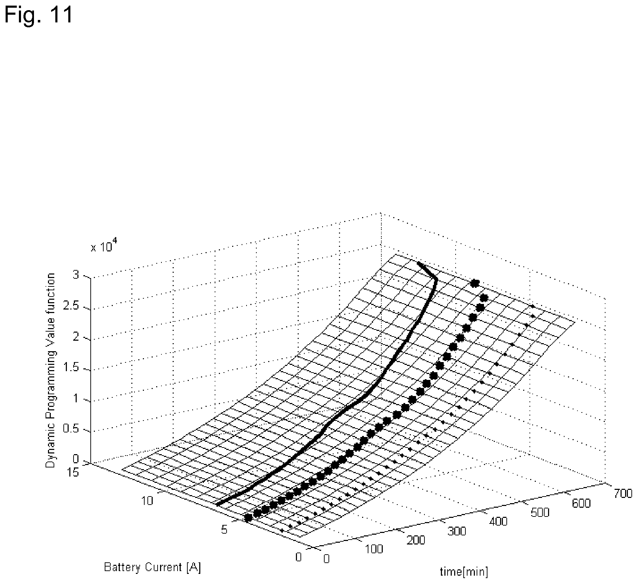

Figur 11 beschreibt den Verlauf der Sollwerttrajektorien des Ladestroms $I_1$ des ersten Ladegerätes (große Punkte) und des Ladestroms $I_2$ des zweiten Ladegerätes (kleine Punkte) sowie des Ladestroms $I_{Bat}$ (durchgezogene Linie), der sich in Abhängigkeit der Sollwerttrajektorie des Ladestroms $I_1$ des ersten Ladegerätes und des Ladestroms $I_2$ des zweiten Ladegerätes einstellt, die gemäß der zu Figur 5 beschriebenen dynamischen Programmierung nach Bellman für beispielhafte Randbedingungen ermittelt wurde. Die x-Achse des 3-dimensionalen Kennfeldes beschreibt den jeweiligen Ladestromsollwert für den Ladestrom $I_1$ des ersten Ladegerätes und den Ladestrom $I_2$ des zweiten Ladegerätes zur Batterie in Ampere. Die y-Achse bildet die Zeit, in Minuten, ab. Die z-Achse beschreibt den Wert der Wertefunktion V. Gemäß der Optimierungsaufgabe wird der Sollwert des jeweiligen Ladestroms $I_1$ bzw. $I_2$ bzw. $I_{Bat}$ nahe dem Maximum der Wertefunktion V geführt, um in der zur Verfügung stehenden Zeit den gewünschten Ladezustand zu erreichen.

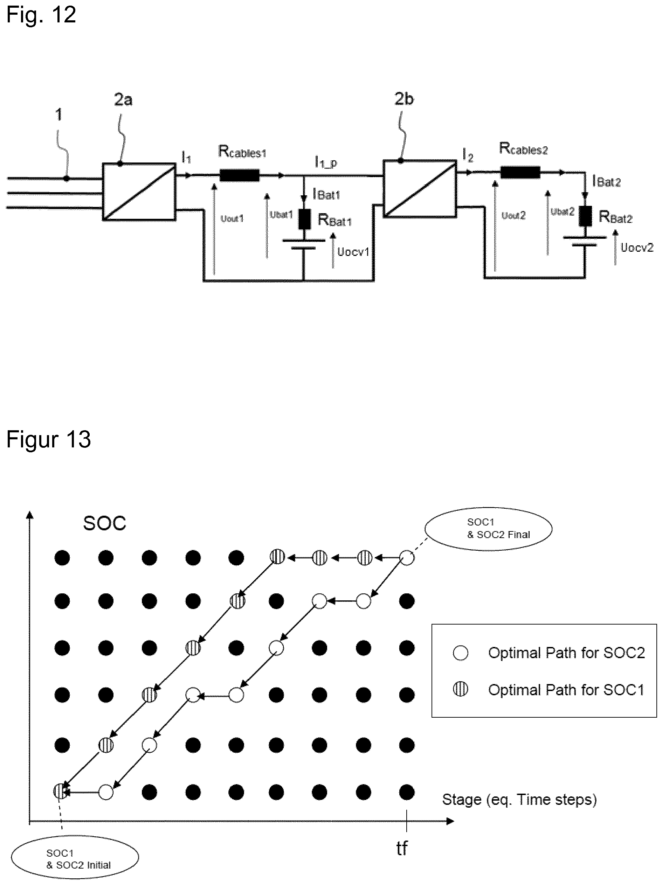

Figur 12 zeigt ein einfaches Ersatzschaltbild eines Ladesystems mit einem ersten und einem zweiten Teilsystem. Das erste Teilsystem umfasst ein mit einem Versorgungsnetz 1 verbundenes erstes Ladegerät 2a sowie eine erste Batterie. Das erste Ladegerät 2a ist als Black-box zwischen dem Versorgungsnetz 1 und einer auszugebenden Ausgangsspannung $U_{Out1}$ dargestellt. Die erste Batterie ist insbesondere eine Hochvolt-Traktionsbatterie eines Elektrofahrzeuges. Das erste Ladegerät entspricht einem elektrischen Konverter, bevorzugt einem AC/DC-Wandler, d. h. am Eingang des ersten Ladegerätes 2a liegt eine Wechselspannung an. Die erste Batterie wird als Ersatzschaltung über Batteriespannung $U_{Bat1}$ und Innenwiderstand $R_{Bat1}$ beschrieben. Die Systemgleichungen dieses ersten Batteriesystems können daher wie folgt dargestellt werden.

Die Ableitung ($\dot{SOC}_1$) des Ladezustandes ($SOC_1$) der ersten Batterie wird durch die dynamische Gleichung:

$$\dot{SOC}_1 = \frac{1}{Q_{Bat1}} \cdot \frac{U_{OCV1} - \sqrt{U_{OCV1}^2 - 4.Ri_{Bat1}.P_{Bat1}}}{2.Ri_{Bat1}}$$

beschrieben, wobei

$U_{OCV1}$ die Leerlaufspannung der ersten Batterie,
$I_{Bat1}$ der Ladestrom der ersten Batterie,
$Ri_{Bat1}$ der Innenwiderstand der ersten Batterie,
$P_{Bat1}$ die Ladeleistung, welche über das Produkt von $U_{Bat1}$ x $I_{Bat1}$ beschrieben wird, ist.

Der von dem ersten Ladegerät 2a ausgangsseitig fließende Strom $I_1$ entspricht, wie in Figur 12 gezeigt, der Summe von Ladestrom der ersten Batterie $I_{Bat1}$ und von eingangsseitig eines zweiten Ladegerätes 2b fließendem Strom $I_{1\_p}$. Das zweite Ladegerät 2b wird später genauer beschrieben. Der Ladezustand $SOC_1$ kann durch das Integral

$$SOC_1 = \int_{t0}^{tf} \dot{SOC}_1(t).dt$$

beschrieben werden. Das Integral der Ladezustandsänderung ($\dot{SOC}_1$) wird zwischen einer Startzeit to und einer Endzeit tf des Ladeprozesses gebildet. Der Spannungsabfall über der Batterie $U_{Bat1}$ ist abhängig vom Ladezustand $SOC_1$ und der Ladeleistung $P_{Bat1}$ bzw. vom Ladestrom $I_{Bat1}$ und kann als $U_{Bat1} = f(SOC_1,P_{Bat1})$ geschrieben werden.

Das erste Ladegerät 2a kann mittels eines Wirkungsgradmodells beschrieben werden. Das erste Ladegerät 2a wird mittels seiner Ladeausgangsleistung $P_{Out\_1}$ auf der DC-Seite (Gleichstromseite) und der Eingangsleistung auf der Wechselstromseite AC-Seite $P_{IN\_1}$ und einem Wirkungsgrad des Ladegerätes $\eta_{Charger\_1}$ beschrieben und kann

$$P_{IN\_1} = \frac{P_{Out\_1}}{\eta_{Charger\_1}}$$

damit als   formuliert werden. Die Ladeleistung $P_{Bat1}$ ergibt sich demnach aus $P_{Bat1} = P_{Out\_1}-(R_{cables1})\cdot I_{Bat1}{}^2$, wobei $R_{Cables1}$ den ohmschen Widerstand der Zuleitungen im ersten Teilsystem beschreibt. Der Wirkungsgrad des zweiten Ladegerätes $\eta_{Charger\_1}$ weist wenigstens eine Abhängigkeit vom Ausgangsstrom $I_1$ der Gleichstromseite auf. Weitere mögliche Einflussgrößen können die Ausgangsspannung $U_{out1}$ der Gleichstromseite, die Eingangsspannung $U_{IN1}$ der Wechselstromseite und der jeweilige Eingangsstrom der Wechselstromseite $I_{IN1}$ sein. Betrachtet man alle genannten Einflussgrößen, so kann der Wirkungsgrad des Ladegerätes als $\eta_{Charger\_1} = g(U_{IN1},U_{out1},I_{IN1},I_1)$ formuliert werden. Die Ausgangsspannung $U_{out1}$ auf der Gleichstromseite ergibt sich aus

$$U_{out1} = U_{Bat1} + R_{cables1} \cdot I_1 .$$

Ein Modell, welches die gesamten Leistungsverluste $P_{Losses\_1}$ innerhalb des ersten Teilsystems summiert, ergibt sich aus der Addition von $P_{Losses\_Charger\_1} + P_{Losses\_Cable1} + P_{Losses\_Battery1}$ dem Leistungsverlust des ersten Ladegerätes 2a, der ersten Batterie und der Zuleitungen.

Es kann mit der folgenden Gleichung beschrieben werden.

$$P_{Losses\_1} = R_{cables1}.I_1^2 + Ri_{Bat1}.I_{Bat1}^2 + U_{out1}.I_1\left(\frac{1}{\eta_{charger\_1}} - 1\right).$$

Das zweite Teilsystem umfasst ein mit dem ersten Teilsystem verbundenes zweites Ladegerät 2b sowie eine zweite Batterie. Das zweite Ladegerät 2b ist als Black-box zwischen dem ersten Teilsystem und einer auszugebenden Ausgangsspannung $U_{Out2}$ dargestellt. Die zweite Batterie ist insbesondere zur Versorgung des Bordnetzes eines Fahrzeuges auf einer Niederspannungsebene vorgesehen, etwa 12 Volt. Das zweite Ladegerät entspricht einem elektrischen Konverter, d. h. einem DC/DC-Wandler, d. h. am Eingang des zweiten Ladegerätes 2b liegt eine Gleichspannung an. Die zweite Batterie wird als Ersatzschaltung über Batteriespannung $U_{Bat2}$ und Innenwiderstand $R_{Bat2}$ beschrieben. Die Systemgleichungen dieses zweiten Batteriesystems können daher wie folgt dargestellt werden.

Die Ableitung ($\dot{SOC}_2$) des Ladezustandes ($SOC_2$) der zweiten Batterie wird durch die dynamische Gleichung:

$$\dot{SOC}_2 = \frac{1}{Q_{Bat2}}.\frac{U_{OCV2} - \sqrt{U_{OCV2}^2 - 4.Ri_{Bat2}.P_{Bat2}}}{2.Ri_{Bat2}}$$

beschrieben, wobei

$U_{OCV2}$ die Leerlaufspannung der zweiten Batterie,
$I_{Bat2}$ der Ladestrom der zweiten Batterie,
$Ri_{Bat2}$ der Innenwiderstand der zweiten Batterie,
$P_{Bat2}$ die Ladeleistung, welche über das Produkt von $U_{Bat2}$ x $I_{Bat2}$ beschrieben wird, ist.

Der von dem zweiten Ladegerät 2b ausgangsseitig fließende Strom $I_2$ entspricht, wie in Figur 12 gezeigt, dem

$$SOC_2 = \int_{t0}^{tf} \dot{SOC_2}(t).dt$$

Ladestrom der zweiten Batterie $I_{Bat2}$. Der Ladezustand $SOC_2$ kann durch das Integral be-schrieben werden. Das Integral der Ladezustandsänderung ($\dot{SOC_2}$) wird zwischen einer Startzeit to und einer Endzeit tf des Ladeprozesses gebildet. Der Spannungsabfall über der Batterie $U_{Bat2}$ ist abhängig vom Ladezustand $SOC_2$ und der Ladeleistung $P_{Bat2}$ bzw. vom Ladestrom $I_{Bat2}$ und kann als $U_{Bat2} = f(SOC_2, P_{Bat2})$ geschrieben werden.

Das zweite Ladegerät 2b kann mittels eines Wirkungsgradmodells beschrieben werden. Das zweite Ladegerät 2b wird mittels seiner Ladeausgangsleistung $P_{Out\_2}$ auf der ersten DC-Seite (Gleichstromseite) und der Eingangsleistung auf der zweiten DC-Seite $P_{IN\_2}$ und einem Wirkungsgrad des Ladegerätes $\eta_{Charger\_2}$ beschrieben und kann damit als

$$P_{IN\_2} = \frac{P_{Out\_2}}{\eta_{Charger\_2}}$$

formuliert werden bzw. durch die Verknüpfung des zweiten Teilsystems mit dem ersten Teilsystem kann die Eingangsleistung auch wie folgt beschrieben werden $P_{IN\_2} = U_{Bat1} \cdot I_{1\_p}$. Die Ladeleistung $P_{Bat2}$ ergibt sich demnach aus $P_{Bat2} = P_{Out\_2} - (R_{cables2}) \cdot I_{Bat2}{}^2$, wobei $R_{Cables2}$ den ohmschen Widerstand der Zuleitungen im zweiten Teilsystem beschreibt.

Der Wirkungsgrad des zweiten Ladegerätes $\eta_{Chager\_2}$ weist wenigstens eine Abhängigkeit vom Ausgangsstrom $I_2$ der zweiten Gleichstromseite auf. Weitere mögliche Einflussgrößen können die Ausgangsspannung $U_{out2}$ der zweiten Gleich-stromseite, die Eingangsspannung $U_{Bat1}$ der ersten Gleichstromseite und der jeweilige Eingangsstrom der ersten Gleichstromseite $I_{1\_p}$ sein. Betrachtet man alle genannten Einflussgrößen, so kann der Wirkungsgrad des Ladegerätes als $\eta_{Charger\_2} = g(U_{Bat1}, U_{out2}, I_{1\_p}, I_2)$ formuliert werden. Die Ausgangsspannung $U_{out2}$ auf der zweiten Gleichstromseite ergibt sich aus $U_{out2} = U_{Bat2} + R_{cables2} \cdot I_2$.

Ein Modell, welches die gesamten Leistungsverluste $P_{Losses\_2}$ innerhalb des zweiten Teilsystems summiert, ergibt sich aus der Addition von $P_{Losses\_Charger\_2} + P_{Losses\_Cable2} + P_{Losses\_Battery2}$ dem Leistungsverlust des zweiten Ladegerätes 2b, der zweiten Batterie und der Zuleitungen.

Es kann mit der folgenden Gleichung beschrieben werden.

$$P_{Losses\_2} = R_{cables2}.I_2^2 + Ri_{Bat2}.I_{Bat2}^2 + U_{out2}.I_2.\left(\frac{1}{\eta_{charger\_2}} - 1\right).$$

Im weiteren Verlauf wird, wie schon für den Einsatz eines einzigen Ladegerätes 2 beschrieben, für den Einsatz mehrerer Ladegeräte 2a bzw. 2b, die jeweils einem Teilsystem zugeordnet sind, eine Ladestrategie generiert, welche hinsichtlich der Leistungsverluste beim Laden optimal ist. D. h. die Lösung eines Optimierungsproblems führt zu einer Ladestrategie mit einem Minimum an Energieverlusten beim Laden. Eine optimierte Sollwerttrajektorie des von dem ersten Ladegerät 2a ausgangsseitig fließenden Stroms $I_1$ sowie von dem zweiten Ladegerät 2b ausgangsseitig fließenden Stroms $I_2$ bzw. der Ladeströme $I_{Bat1}$, $I_{Bat2}$ oder der jeweiligen Ladeleistung $P_{Out\_1}$ des ersten Ladegerätes 2a bzw. $P_{Out\_2}$ des zweiten Ladegerätes 2b kann generiert werden, um die dem jeweiligen Teilsystem zugeordnete Batterie in einer zur Verfügung stehenden Ladezeit bis zu einem gewünschten Ladezustand SOC aufzuladen. Im weiteren Verlauf wird als mögliches Optimierungsverfahren zum Generieren der oben beschriebenen optimierten Sollwerttrajektorien ein rekursiver Algorithmus bzw. die dynamische Programmierung nach Bellmann verwendet, wie schon im Zusammenhang mit dem Einsatz eines einzigen Ladegerätes 2 in Verbindung mit Figur 5 und 6 dargestellt wurde. D. h. ein rekursiver Algorithmus bzw. die dynamische Programmierung nach Bellmann ist geeignet, für eine beliebige Anzahl an Ladegeräten jeweils die Sollwerttrajektorien zu ermitteln, um die gesamten Leistungsverluste $P_{Losses}$ zu minimieren, bei der Ladung der dem jeweiligen Teilsystem zugeordneten Batterie. Der gesamte Leistungsverlust $P_{Losses}$ ergibt sich dabei aus der Summe der Leistungsverluste der einzelnen Teilsysteme $P_{Losses\_1}$ bzw. $P_{Losses\_2}$. D. h. erfindungsgemäß werden für das jeweilige Ladegerät Sollwerttrajektorien für den jeweils ausgangsseitig fließenden Strom bzw. Ladestrom gebildet, so dass der Leistungsverlust des gesamten Systems, das mehrere Teilsysteme umfasst, bei der Ladung der einzelnen, den jeweiligen Teilsystemen zugeordneten Batterien, minimal ist.

Figur 13 zeigt eine schematische Darstellung eines rekursiven Algorithmus in einem Diagramm, wie im Zusammenhang mit Figur 5 beschrieben. Abweichend von Figur 5 sind jedoch gemäß Figur 13 der jeweils gewünschte zu erreichende Endladezustand SOC_Final_1 und SOC_Final_2 der beiden zu ladenden Batterien gezeigt, wobei ein optimaler Weg zum jeweiligen Startpunkt SOC_Initial_1 und SOC_Initial_2 gesucht wird, bei welchem in Abhängigkeit von der Sollwerttrajektorie der Ausgangsströme $I_1, I_2$ der jeweiligen Gleichstromseite ein hinsichtlich der Energieverluste minimierter Ladevorgang generiert wird. Wie in Figur 13 gezeigt, können die optimalen Wege zum jeweiligen Startpunkt unterschiedlich verlaufen. D. h. die hier beschriebene Methode der dynamischen Programmierung nach Bellmann ist geeignet, sowohl die optimale Sollwerttrajektorie für den Ladestrom $I_{Bat1}$ oder Ladeleistung $P_{Out\_1}$ des ersten Ladegerätes, als auch die optimale Sollwerttrajektorie für den Ladestrom $I_{Bat2}$ oder Ladeleistung $P_{Out\_2}$ des zweiten Ladegerätes bzw. der Ausgangsströme $I_1$, $I_2$ der jeweiligen Gleichstromseite zu ermitteln. Der optimale Weg zum Startpunkt wird jeweils gefunden, indem das Optimierungsproblem in eine Vielzahl von Teilaufgaben zerlegt wird. Die Änderung des Ladezustandes $\dot{SOC}$ in jedem Optimierungsschritt wird mit den dabei auftretenden Leistungsverlusten $P_{Losses}$ beim Laden bewertet. Der optimale Pfad für die jeweilige Sollwerttrajektorie der Ausgangsströme $I_1$, $I_2$ der jeweiligen Gleichstromseite wird ermittelt, indem in jedem Schritt die größtmögliche Änderung des Ladezustandes $\dot{SOC}$ für die geringsten dabei auftretenden Leistungsverluste $P_{Losses}$ gesucht wird.

Es kann ein Beschleunigungsfaktor alpha verwendet werden, der von der Zeit bis zum Erreichen des Ladezustandes SOC abhängig ist. Die Wertefunktion V wird entsprechend der nachfolgenden Gleichungen für den jeweils vorhergehenden Zeitpunkt (t-1) ermittelt. Rekursiv wird deren Wert mit der Funktion F des Gewinns, also der maximalen Ladezustandsänderung unter Berücksichtigung der dabei auftretenden Leistungsverluste berechnet. Der Faktor alpha wird aus der Endzeit tf zum Erreichen des gewünschten Ladezustandes bestimmt.

F beschreibt dabei die Funktion des Gewinns, welche von einem Zeitpunkt t+1 rekursiv zum Zeitpunkt t führt. Die Ausgangsströme $I_1$, $I_2$ der jeweiligen Gleichstromseite werden dabei so gewählt, dass der jeweils nächste Optimierungsschritt mit einem Maximum an Gewinn erfolgt, wobei dieser als Ladezustandsänderung $\dot{SOC}$ in Relation zu den auftretenden Leistungsverlusten $P_{Losses}$ definiert wird. Die so gefundene jeweilige Sollwerttrajektorie führt vom finalen Ladezustand zum Ausgangspunkt und kann zeitlich invertiert als jeweilige Sollwerttrajektorie zum Laden genutzt werden.

$$V(\dot{SOC}_1(k), \dot{SOC}_2(k)) = \max_{I_1, I_2}(F(I_1, I_2, k) + V(\dot{SOC}_1(k+1), \dot{SOC}_2(k+1)))$$

$$F(I_1, I_2, k) = \alpha\,\dot{SOC}_1 + \beta\,\dot{SOC}_2 - P_{Losses}(\dot{SOC}_1(k), \dot{SOC}_2(k), I_1, I_2)$$

$$P_{Losses} = P_{Losses\_1} + P_{Losses\_2}$$

**Bezugszeichenliste**

| | |
|---|---|
| 1 | Versorgungsnetz |
| 2, 2a, 2b, 2n | Ladegerät |
| 3 | Batterie |
| SOC, SOH, T | Lade- und Gesundheitszustand, Batterietemperatur |
| $\dot{SOC}$ | Ableitung des Ladezustands (Ladezustandsänderung) |
| $Q_{Bat}$ | Nennladung |
| $U_{Bat}$, $U_{OCV}$ | Batteriespannung, Leerlaufspannung Batterie |
| $I_{Bat}$ | Ladestrom |
| $Ri_{Bat}$ | Innenwiderstand der Batterie |
| $P_{Bat}$ | Ladeleistung |
| $t_0$ | Startzeit Ladevorgang |
| tf | Endzeit Ladevorgang |
| $P_{Out}$ | Ausgangsleistung Ladegerät |
| $P_{AC}$ | aufgenommene Leistung AC-Seite des Ladegerätes (Eingangsleistung) |
| $P_{stored}$ | in die Batterie gespeicherte Leistung |
| $\eta_{Charger}$ | Wirkungsgrad Ladegerät |
| $I_{Out}$ | Ausgangsstrom Ladegerät (DC-Seite) |
| $U_{Out}$ | Ausgangsspannung Ladegerät (DC-Seite) |
| $I_{AC}$ | Eingangsstrom Ladegerät (AC-Seite) |
| $U_{AC}$ | Eingangsspannung Ladegerät (AC-Seite) |
| $P_{Losses}$ | Leistungsverluste gesamt |
| $P_{Losses\_Charger}$ | Leistungsverluste im Ladegerät beim Laden |
| $P_{Losses\_Cables}$ | Leistungsverluste in den Kabeln beim Laden |

| $P_{Losses\_Battery}$ | Leistungsverluste in der Batterie beim Laden |
|---|---|
| $\eta_{global}$ | Wirkungsgrad global |
| $J$ | Gütemaß für das Minimum der Energieverluste |
| $P$ | Kozustandsvariable (costate variable) |
| $H$ | Wert der Hamilton-Funktion |
| $R_{Cables}$ | ohmscher Widerstand der Zuleitungen |

**Patentansprüche**

1. Verfahren zum Laden einer Batterie, bei welchem ein Minimum einer zum Laden zur Verfügung stehenden Ladezeit und ein erforderliches Minimum des zu erreichenden Ladezustandes (SOC), auf welchen die Batterie aufzuladen ist, vor dem Start des Ladevorganges bekannt sind,
**dadurch gekennzeichnet, dass**
das Verfahren die folgenden Schritte aufweist:

- Ermitteln einer optimalen Sollwerttrajektorie für den Ladestrom ($I_{Bat}$) und/oder die Ladespannung ($U_{Bat}$) oder die Ladeleistung ($P_{Bat}$) über den Verlauf der Ladezeit, welche die Leistungsverluste in der Batterie ($P_{Losses\_Battery}$) beim Laden minimiert, wobei für das Ermitteln der optimalen Sollwerttrajektorie ein Modell der Leistungsverluste genutzt wird, welches die Leistungsverluste ($P_{Losses\_Battery}$) in der Batterie beim Laden im Verlauf des Ladeprozesses beschreibt, wobei das Modell wenigstens vom jeweiligen Ladezustand (SOC) der Batterie abhängt und weiterhin vom Ladestrom ($I_{Bat}$) und/oder der Ladespannung ($U_{Bat}$) oder der Ladeleistung ($P_{Bat}$) abhängig ist,
wobei die optimale Sollwerttrajektorie für den Ladestrom ($I_{Bat}$) und/oder die Ladespannung ($U_{Bat}$) oder die Ladeleistung ($P_{Bat}$) derart ermittelt wird, dass für das gegebene Modell der Leistungsverluste ein minimaler Energieverlust innerhalb der minimal zur Verfügung stehenden Ladezeit beim Laden auf das erforderliche Minimum des zu erreichenden Ladezustandes (SOC) auftritt, wobei die Minimierung der Leistungsverluste ($P_{Losses\_Battery}$) zu jedem Zeitpunkt des Ladevorganges über die gesamte Ladezeit zu einem minimalen Energieverlust innerhalb der zur Verfügung stehenden Ladezeit führt, und
- Führen eines Sollwertes für den Ladestrom ($I_{Bat}$) und/oder die Ladespannung ($U_{Bat}$) oder die Ladeleistung ($P_{Bat}$) entlang der ermittelten Sollwerttrajektorie zum Laden der Batterie.

2. Verfahren nach Anspruch 1, wobei das Modell der Leistungsverluste in der Batterie ($P_{Losses\_Battery}$) beim Laden um ein Modell der wenigstens ladestromabhängigen Leistungsverluste eines Ladegerätes ($P_{Losses\_Charger}$) und/oder um ein Modell der wenigstens ladestromabhängen Leistungsverluste der Verbindungskabel ($P_{Losses\_Cables}$) ergänzt wird, wobei eine optimale Sollwerttrajektorie für den Ladestrom ($I_{Bat}$) und/oder die Ladespannung ($U_{Bat}$) oder die Ladeleistung ($P_{Bat}$) über den Verlauf der Ladezeit ermittelt wird, bei welcher die gesamten Leistungsverluste ($P_{Losses}$) beim Laden minimiert werden, indem für das ergänzte Modell, welches aus dem Modell der Leistungsverluste in der Batterie ($P_{Losses\_Battery}$) und einer Ergänzung um das Modell der wenigstens ladestromabhängigen Leistungsverluste eines Ladegerätes ($P_{Losses\_Charger}$) und/oder einer Ergänzung um das Modell der wenigstens ladestromabhängen Leistungsverluste der Verbindungskabel ($P_{Losses\_Cables}$) besteht, eine Optimierung derart erfolgt, dass die Sollwerttrajektorie für den Ladestrom ($I_{Bat}$) und/oder die Ladespannung ($U_{Bat}$) oder die Ladeleistung ($P_{Bat}$) ermittelt wird, bei dem für das ergänzte Modell ein minimaler Energieverlust innerhalb der minimal zur Verfügung stehenden Ladezeit beim Laden auf das erforderliche Minimum des zu erreichenden Ladezustandes (SOC) auftritt.

3. Verfahren nach Anspruch 1-2, wobei das Modell der Leistungsverluste in der Batterie ($P_{Losses\_Battery}$) beim Laden durch wenigstens ein ladestrom- und ladezustandsabhängiges Modell abgebildet wird, wobei die Änderung des Innenwiderstandes der Batterie ($Ri_{Bat}$) hervorgerufen durch die Temperatureinflüsse und/oder den Alterungszustand der Batterie als weitere Einflussgröße des Modells betrachtet wird.

4. Verfahren nach Anspruch 1, wobei wenn ein erstes Teilsystem, aufweisend ein erstes Ladegerät (2a) und eine erste Batterie, mit einem weiteren Teilsystem, aufweisend ein weiteres Ladegerät (2b) und eine weitere Batterie, zusammenwirkt und die an der ersten Batterie anliegende Gleichspannung ($U_{Bat1}$) eingangsseitig an dem weiteren Ladegerät (2b) anliegt, sowie der Ausgangsstrom ($I_1$) des ersten Ladegerätes (2a) die Summe von Ladestrom ($I_{Bat1}$) für die erste Batterie und Eingangsstrom ($I_{1\_p}$) des weiteren Ladegerätes (2b) ist, gemäß dem Verfahren nach Anspruch 1 eine optimale Sollwerttrajektorie für den Ausgangsstrom ($I_1$) des ersten Ladegerätes (2a) ermittelt und ein Sollwert für den Ausgangsstrom ($I_1$) des ersten Ladegerätes (2a) entlang dieser Sollwerttrajektorie geführt wird und eine optimale Sollwerttrajektorie für den Ladestrom ($I_{Bat2}$) für die weitere Batterie ermittelt und ein Sollwert für den Ladestrom ($I_{Bat2}$) für die weitere Batterie entlang dieser Sollwerttrajektorie geführt wird.

5. Verfahren nach Anspruch 1, wobei wenn zum Laden der Batterie mehrere parallel geschaltete Ladegeräte (2a, 2b, 2n) verwendet werden, jeweils die optimale Sollwerttrajektorie für den Ausgangsstrom ($I_1$, $I_2$ $I_n$) jedes verwendeten Ladegerätes (2a, 2b, 2n) gemäß dem Verfahren nach Anspruch 1 ermittelt wird, wobei ein Sollwert für den Ausgangsstrom ($I_1$) des ersten Ladegerätes (2a) entlang dieser Sollwerttrajektorie geführt wird und ein Sollwert für den Ausgangsstrom ($I_2$) des zweiten Ladegerätes (2b) entlang dieser Sollwerttrajektorie geführt wird.

6. Verfahren nach Anspruch 1-3, bei dem zur Lösung des Optimierungsproblems minimaler Leistungsverluste ($P_{Losses}$) beim Laden auf einem zu erreichenden Ladezustand (SOC) in einer vorgegebenen Ladezeit in einem schrittweisen Verfahren jede mögliche Sollwerttrajektorie den Ladestrom ($I_{Batt}$) und/oder die Ladespannung ($U_{Batt}$) oder die Ladeleistung ($P_{Batt}$) und deren zugehörigen gesamten Energieverluste beim Laden ermittelt werden, wobei die Leistungsverluste ($P_{Losses}$) für jeden Schritt unter Nutzung des Modells der Leistungsverluste ($P_{Losses}$) ermittelt werden und über die gesamte Ladezeit der gesamte Energieverlust summiert wird und die Sollwerttrajektorie ausgewählt wird, welche ein Minimum an Energieverlusten beim Laden realisiert.

7. Konverter zum Laden einer Batterie mit einer Steuereinheit, bei welchem ein Minimum an zur Verfügung stehender Ladezeit und ein Minimum an zu erreichendem Ladezustand (SOC) vorgegeben werden kann, wobei der Konverter ein Ladegerät (2) umfasst, das dazu eingerichtet ist, ein hinsichtlich der Energieverluste beim Laden optimiertes Ladeverfahren gemäß der vorhergehenden Ansprüche 1 bis 3 auszuführen.

8. Konverter zum Laden einer Batterie mit einer Steuereinheit, bei welchem ein Minimum an zur Verfügung stehender Ladezeit und ein Minimum an zu erreichendem Ladezustand (SOC) vorgegeben werden kann, wobei der Konverter mehrere Ladegeräte (2a, 2b, 2n) umfasst, die dazu eingerichtet sind, ein hinsichtlich der Energieverluste beim Laden optimiertes Ladeverfahren gemäß dem vorhergehenden Anspruch 4 oder 5 auszuführen.

9. Konverter nach Anspruch 7 oder 8, wobei das Minimum an zur Verfügung stehender Ladezeit und das Minimum an zu erreichendem Ladezustand über eine Schnittstelle zur Steuereinheit von einem Nutzer eingebbar ist.

10. Konverter nach Anspruch 7, 8 oder 9, wobei Batterieparameter von einem Nutzer eingebbar sind oder über eine Schnittstelle zwischen einem Batteriemanagementsystem und der Steuereinheit des Konverters übertragbar sind oder die Batterieparameter in einem internen Speicher, der Vorgabewerte für definierte Batterietypen aufweist, in der Steuereinheit des Konverters vorliegen.

**Claims**

1. Method for charging a battery, in which a minimum of a charging time available for charging and a required minimum of the state of charge (SOC) to be reached, to which state of charge the battery is to be charged, are known prior to the start of the charging process, **characterized in that** the method comprises the following steps:

   - identifying an optimum setpoint value trajectory for the charging current ($I_{Bat}$) and/or the charging voltage ($U_{Bat}$) or the charging power ($P_{Bat}$) over the course of the charging time, said setpoint value trajectory minimizing the power losses in the battery ($P_{Losses\_Battery}$) during charging, wherein a model of the power losses is used for the identification of the optimum setpoint value trajectory, said model describing the power losses ($P_{Losses\_Battery}$) in the battery during charging over the course of the charging process, wherein the model depends at least on the respective state of charge (SOC) of the battery and furthermore is dependent on the charging current ($I_{Bat}$) and/or the charging voltage ($U_{Bat}$) or the charging power ($P_{Bat}$), wherein the optimum setpoint value trajectory for the charging current ($I_{Bat}$) and/or the charging voltage ($U_{Bat}$) or the charging power ($P_{Bat}$) is identified in such a way that, for the given model of the power losses, a minimum energy loss appears within the minimum available charging time during charging at the required minimum of the state of charge (SOC) to be reached, wherein the minimization of the power losses ($P_{Losses\_Battery}$) at each point in time of the charging process over the overall charging time leads to a minimum energy loss within the available charging time, and
   - leading a setpoint value for the charging current ($I_{Bat}$) and/or the charging voltage ($U_{Bat}$) or the charging power ($P_{Bat}$) along the identified setpoint value trajectory in order to charge the battery.

**2.** Method according to Claim 1, wherein the model of the power losses in the battery ($P_{Losses\_Battery}$) during charging is supplemented by a model of the at least charging-current-dependent power losses of a charging device ($P_{Losses\_Charger}$) and/or by a model of the at least charge-current-dependent power losses of the connecting cable ($P_{Losses\_Cables}$), wherein an optimum setpoint value trajectory for the charging current ($I_{Bat}$) and/or the charging voltage ($U_{Bat}$) or the charging power ($P_{Bat}$) is identified over the course of the charging time, in which the overall power losses ($P_{Losses}$) during charging are minimized by virtue of, for the supplemented model consisting of the model of the power losses in the battery ($P_{Losses\_Battery}$) and supplementing by the model of the at least charging-current-dependent power losses of a charging device ($P_{Losses\_Charger}$) and/or supplementing by the model of the at least charge-current-dependent power losses of the connecting cable ($P_{Losses\_Cables}$), an optimization being carried out in such a way that the setpoint value trajectory for the charging current ($I_{Bat}$) and/or the charging voltage ($U_{Bat}$) or the charging power ($P_{Bat}$) is identified, in which, for the supplemented model, a minimum energy loss occurs within the minimum available charging time during charging at the required minimum of the state of charge (SOC) to be achieved.

**3.** Method according to Claim 1-2, wherein the model of the power losses in the battery ($P_{Losses\_Battery}$) during charging is represented by at least one charging-current-dependent and state-of-charge-dependent model, wherein the change in the internal resistance of the battery ($Ri_{Bat}$) caused by the temperature influences and/or the state of ageing of the battery is considered as a further influencing variable of the model.

**4.** Method according to Claim 1, wherein, when a first subsystem having a first charging device (2a) and a first battery interacts with a further subsystem having a further charging device (2b) and a further battery and the DC voltage ($U_{Bat1}$) applied to the first battery is applied to the input side of the further charging device (2b), and the output current ($I_1$) of the first charging device (2a) is the sum of the charging current ($I_{Bat1}$) for the first battery and the input current ($I_{1\_p}$) of the further charging device (2b), in accordance with the method according to Claim 1, an optimum setpoint value trajectory for the output current ($I_1$) of the first charging device (2a) is identified and a setpoint value for the output current ($I_1$) of the first charging device (2a) is led along said setpoint value trajectory and an optimum setpoint page trajectory for the charging current ($I_{Bat2}$) for the further battery is identified and a setpoint value for the charging current ($I_{Bat2}$) for the further battery is led along said setpoint value trajectory.

**5.** Method according to Claim 1, wherein, when a plurality of parallel-connected charging devices (2a, 2b, 2n) are used for charging the battery, in each case the optimum setpoint value trajectory for the output current ($I_1$, $I_2$, $I_n$) of each used charging device (2a, 2b, 2n) is identified in accordance with the method according to Claim 1, wherein a setpoint value for the output current ($I_1$) of the first charging device (2a) is led along said setpoint value trajectory and a setpoint value for the output current ($I_2$) of the second charging device (2b) is led along said setpoint value trajectory.

**6.** Method according to Claim 1-3, in which, to solve the optimization problem of minimum power losses ($P_{Losses}$) during charging to a state of charge (SOC) to be achieved in a prescribed charging time in a stepped method, each possible setpoint value trajectory, the charging current ($I_{Bat}$) and/or the charging voltage ($U_{Bat}$) or the charging power ($P_{Bat}$) and the associated overall energy losses are identified during charging, wherein the power losses ($P_{Losses}$) are identified for each step using the model of the power losses ($P_{Losses}$) and the overall energy loss is summed over the overall charging time and the setpoint value trajectory is selected, which results in a minimum of energy losses during charging.

**7.** Converter for charging a battery having a control unit, in which a minimum available charging time and a minimum state of charge (SOC) to be achieved can be prescribed, wherein the converter comprises a charging device (2), which is configured to execute a charging method according to the preceding Claims 1 to 3 that is optimized in terms of the energy losses during charging.

**8.** Converter for charging a battery having a control unit, in which a minimum available charging time and a minimum state of charge (SOC) to be achieved can be prescribed, wherein the converter comprises a plurality of charging devices (2a, 2b, 2n), which are configured to execute a charging method according to the preceding Claim 4 or 5 that is optimized in terms of the energy losses during charging.

**9.** Converter according to Claim 7 or 8, wherein the minimum available charging time and the minimum state of charge to be achieved can be input to the control unit by a user via an interface.

**10.** Converter according to Claim 7, 8 or 9, wherein battery parameters can be input by a user or can be transmitted between a battery management system and the control unit of the converter via an interface or the battery parameters are present in the control unit of the converter in an internal memory, which has specified values for defined battery types.

**Revendications**

1. Procédé de charge d'une batterie, dans lequel un minimum d'un temps de charge disponible pour la charge et un minimum requis de l'état de charge (SOC) à atteindre, auquel la batterie doit être chargée, sont connus avant le début du processus de charge, **caractérisé en ce que** le procédé comporte les étapes suivantes :

   - déterminer une trajectoire optimale de la valeur de consigne pour le courant de charge ($I_{Bat}$) et/ou la tension de charge ($U_{Bat}$) ou la puissance de charge ($P_{Bat}$) tout au long du temps de charge, qui minimise les pertes de puissance dans la batterie ($P_{Losses\_Battery}$) lors de la charge,
   dans lequel, pour déterminer la trajectoire optimale de la valeur de consigne, on utilise un modèle des pertes de puissance qui décrit les pertes de puissance ($P_{Losses\_Battery}$) dans la batterie lors de la charge tout au long du processus de charge,
   dans lequel le modèle dépend au moins de l'état de charge (SOC) respectif de la batterie et dépend en outre du courant de charge ($I_{Bat}$) et/ou de la tension de charge ($U_{Bat}$) ou de la puissance de charge ($P_{Bat}$), dans lequel la trajectoire optimale de la valeur de consigne pour le courant de charge ($I_{Bat}$) et/ou la tension de charge ($U_{Bat}$) ou la puissance de charge ($P_{Bat}$) est déterminée de manière à ce que, pour le modèle donné des pertes de puissance, une perte d'énergie minimale se produise au cours du temps de charge minimum disponible lors d'une charge au minimum requis de l'état de charge (SOC) à atteindre, dans lequel la minimisation des pertes de puissance ($P_{Losses\_Battery}$) à chaque instant du processus de charge sur la totalité du temps de charge conduit à une perte d'énergie minimale au cours du temps de charge disponible, et
   - faire varier une valeur de consigne pour le courant de charge ($I_{Bat}$) et/ou la tension de charge ($U_{Bat}$) ou la puissance de charge ($P_{Bat}$) le long de la trajectoire déterminée de la valeur de consigne pour charger la batterie.

2. Procédé selon la revendication 1, dans lequel le modèle des pertes de puissance dans la batterie ($P_{Losses\_Battery}$) lors de la charge est complété par un modèle des pertes de puissance d'un chargeur ($P_{Losses\_Charger}$), qui dépend au moins du courant de charge, et/ou par un modèle des pertes de puissance des câbles de connexion ($P_{Losses\_Cables}$), qui dépend au moins du courant de charge, dans lequel on détermine tout au long du temps de charge une trajectoire optimale de la valeur de consigne pour le courant de charge ($I_{Bat}$) et/ou la tension de charge ($U_{Bat}$) ou la puissance de charge ($P_{Bat}$) pour laquelle les pertes de puissance totales ($P_{Losses}$) lors de la charge sont minimisées en effectuant une optimisation pour le modèle complété qui se compose du modèle des pertes de puissance dans la batterie ($P_{Losses\_Battery}$) et d'un complément constitué par le modèle des pertes de puissance d'un chargeur ($P_{Losses\_Charger}$), qui dépend au moins du courant de charge, et/ou d'un complément constitué par le modèle des pertes de puissance des câbles de connexion ($P_{Losses\_Cables}$), qui dépend au moins du courant de charge, de manière à déterminer la trajectoire de la valeur de consigne pour le courant de charge ($I_{Bat}$) et/ou la tension de charge ($U_{Bat}$) ou la puissance de charge ($P_{Bat}$), selon laquelle, pour le modèle complété, une perte d'énergie minimale se produise au cours du temps de charge minimal disponible lors d'une charge au minimum requis de l'état de charge (SOC) à atteindre.

3. Procédé selon la revendication 1-2, dans lequel le modèle des pertes de puissance dans la batterie ($P_{Losses\_Battery}$) lors de la charge est représenté par au moins un modèle dépendant du courant de charge et de l'état de charge, dans lequel la variation de la résistance interne de la batterie ($Ri_{Bat}$) provoquée par les effets de température et/ou l'état de vieillissement de la batterie est considérée comme étant une autre grandeur d'effet du modèle.

4. Procédé selon la revendication 1, dans lequel, lorsqu'un premier sous-système comportant un premier chargeur (2a) et une première batterie interagit avec un autre sous-système comportant un autre chargeur (2b) et une autre batterie et lorsque la tension continue ($U_{Bat1}$) appliquée à la première batterie est présente sur le côté entrée de l'autre chargeur (2b), ainsi que lorsque le courant de sortie ($I_1$) du premier chargeur (2a) est la somme du courant de charge ($I_{Bat1}$) de la première batterie et du courant d'entrée ($I_{1\_p}$) de l'autre chargeur (2b), conformément au procédé selon la revendication 1, une trajectoire optimale de la valeur de consigne pour le courant de sortie ($I_1$) du premier chargeur (2a) est déterminée et une valeur de consigne pour le courant de sortie ($I_1$) du premier chargeur (2a) est amenée à varier selon ladite trajectoire de la valeur de consigne et une trajectoire optimale de la valeur de consigne pour le courant de charge ($I_{Bat2}$) de l'autre batterie est déterminée et une valeur de consigne pour le courant de charge ($I_{Bat2}$) de l'autre batterie est amenée à varier selon ladite trajectoire de la valeur de consigne.

**5.** Procédé selon la revendication 1, dans lequel, si plusieurs chargeurs (2a, 2b, 2n) connectés en parallèle sont utilisés pour charger la batterie, la trajectoire de la valeur de consigne optimale pour le courant de sortie ($I_1$, $I_2$, $I_n$) de chaque chargeur (2a, 2b, 2n) utilisé est respectivement déterminée conformément au procédé selon la revendication 1, dans lequel une valeur de consigne pour le courant de sortie ($I_1$) du premier chargeur (2a) est amenée à varier selon ladite trajectoire de la valeur de consigne et une valeur de consigne pour le courant de sortie ($I_2$) du second chargeur (2b) est amenée à varier selon ladite trajectoire de la valeur de consigne.

**6.** Procédé selon la revendication 1-3, dans lequel, pour résoudre le problème d'optimisation des pertes de puissance minimales ($P_{Losses}$) lors de la charge à un état de charge (SOC) à atteindre en un temps de charge prédéfini dans un procédé pas à pas, on détermine chaque trajectoire possible de la valeur de consigne, le courant de charge ($I_{Batt}$) et/ou la tension de charge ($U_{Batt}$) ou la puissance de charge ($P_{Batt}$) et les pertes d'énergie totales qui leurs sont associées lors de la charge, dans lequel on détermine les pertes de puissance ($P_{Losses}$) pour chaque étape en utilisant le modèle des pertes de puissance ($P_{Losses}$), on les totalise sur la totalité du temps de charge et on sélectionne la trajectoire de valeur de consigne qui conduit à un minimum des pertes d'énergie lors de la charge.

**7.** Convertisseur destiné à charger une batterie, comportant une unité de commande dans laquelle un temps de charge minimal disponible et un état de charge minimal (SOC) à atteindre peuvent être prédéfinis, dans lequel le convertisseur comprend un chargeur (2) conçu pour mettre en oeuvre un procédé de charge optimisé en ce qui concerne les pertes d'énergie lors de la charge selon les revendications 1 à 3 précédentes.

**8.** Convertisseur destiné à charger une batterie, comportant une unité de commande dans laquelle un temps de charge minimal disponible et un état de charge minimal (SOC) à atteindre peuvent être prédéfinis, dans lequel le convertisseur comprend plusieurs chargeurs (2a, 2b, 2n) qui sont conçus pour mettre en oeuvre un procédé de charge optimisé en ce qui concerne les pertes d'énergie lors de la charge selon la revendication 4 ou 5 précédente.

**9.** Convertisseur selon la revendication 7 ou 8, dans lequel le minimum de temps de charge disponible et l'état de charge minimum à atteindre peuvent être saisis par un utilisateur sur une interface de l'unité de commande.

**10.** Convertisseur selon la revendication 7, 8 ou 9, dans lequel des paramètres de batterie peuvent être saisis par un utilisateur ou peuvent être transférés par l'intermédiaire d'une interface entre un système de gestion de batterie et l'unité de commande du convertisseur, ou les paramètres de batterie sont présents dans l'unité de commande du convertisseur, dans une mémoire interne qui contient des valeurs prédéfinies pour des types de batteries définis.

Fig. 1

Fig. 2

Fig. 3

Fig. 4

Fig. 5

Fig. 6

Fig. 7

EP 2 884 620 B1

Fig. 8

28

Fig. 9

Fig. 10

Fig. 11

Fig. 12

Figur 13

**IN DER BESCHREIBUNG AUFGEFÜHRTE DOKUMENTE**

**In der Beschreibung aufgeführte Patentdokumente**

- CN 102044723 A
- DE 102010011704 A1
- FR 2987143
- US 2009273320 A1
- US 8040110 B2
- EP 2571131 A1
- DE 102012104434 A1
- US 2013249466 A1
- DE 10312591 A1
- US 2012212173 A1